Europäisches Patentamt

European Patent Office

Office européen des brevets

(11) Veröffentlichungsnummer: **0 305 955**

**A2**

(12) **EUROPÄISCHE PATENTANMELDUNG**

(21) Anmeldenummer: **88114082.6**

(22) Anmeldetag: **30.08.88**

(51) Int. Cl.⁴: **B23Q 17/24**

(30) Priorität: **31.08.87 US 91533**
**28.10.87 US 114195**

(43) Veröffentlichungstag der Anmeldung:
**08.03.89 Patentblatt 89/10**

(84) Benannte Vertragsstaaten:
**AT BE CH DE ES FR GB IT LI NL SE**

(71) Anmelder: **Waldrich Siegen**
**Werkzeugmaschinenbau GmbH**
**Daimlerstrasse 24**
**D-5909 Burbach(DE)**

(72) Erfinder: **Kahley, Theodore, Eugene**
**3260 Ironwood Avenue**
**Rockford, Illinois 61109(US)**

(74) Vertreter: **Müller, Gerd et al**
**Patentanwälte**
**HEMMERICH-MÜLLER-GROSSE-POLLMEIER--**
**MEY Hammerstrasse 2**
**D-5900 Siegen 1(DE)**

(54) **Verfahren und Messsystem zum automatischen Messen des von einem auf ein Werkstück einwirkenden Schneidwerkzeug während eines Zerspanungsvorgangs erzielten Arbeitsergebnisses.**

(57) Ein optisch arbeitendes Laserstrahl-Meßsystem 22 zum Messen des Schnittbahn-Durchmessers von in Maschinenspindeln 16 eingespannten, rotierenden Schneidwerkzeugen 18 ist so ausgelegt, daß sich die Schneidwerkzeuge 18 zur Bestimmung und Festlegung der axialen Position für die Werkzeugschneidenspitze annähernd mit der für die Zerspannungsarbeit gewünschten Drehzahl drehen.

FIG. I

# Verfahren und Meßsystem zum automatischen Messen des von einem auf ein Werkstück einwirkenden Schneidwerkzeug während eines Zerspanungsvorgangs erzielten Arbeitsergebnisses

Die Erfindung betrifft ein Verfahren zum automatischen Messen des von einem auf ein Werkstück einwirkenden Schneidwerkzeug während eines Zerspanungsvorgangs erzielten Arbeitsergebnisses, insbesondere zur Bestimmung des exakten Radialabstandes und/oder der exakten Axialposition der Schnittbahn eines rotierenden Schneidwerkzeuges relativ zum Werkstück. Sie betrifft darüber hinaus aber auch ein Meßsystem für die Zusammenarbeit mit in Maschinenspindeln eingespannten, rotierend angetriebenen Schneidwerkzeugen zur Durchführung dieses Verfahrens.

Die Erfindung befaßt sich also mit Bohrvorgängen und Fräsvorgängen an Werkstücken, bei denen es zur punktgenauen Festlegung und Bestimmung der Schnittbahn für die arbeitenden Schneidwerkzeuge relativ zum Werkstück ankommt.

Es geht dabei ganz allgemein um die Durchführung von Bohrvorgängen, wie sie üblicherweise unter Anwendung von rotierenden Bohrstählen ausgeführt werden, aber auch um Fräsvorgänge, die sich mit Hilfe rotierender Fräswerkzeuge ausführen lassen.

Aber auch andere Zerspanungsvorgänge, für deren Durchführung üblicherweise Zirkular-Bohrfräser, Wälzfräser und Messerköpfe zum Einsatz gelangen, sind betroffen.

Bisher hat es sich, hauptsächlich beim Bohren bzw. Ausbohren von Löchern an Werkstücken, in der Praxis gezeigt, daß es nicht möglich ist, allein durch das Festlegen des Bohrstahl-Anschnittpunktes auch die genauen Abmessungen für eine fertige Bohrung zu bestimmen bzw. festzulegen.

Besonders bei der Durchführung von Bohr- oder Ausbohrarbeiten stellen sich zwangsläufig - trotz hoher fachlicher Qualifikation der Maschinenführer - wesentliche Unsicherheitsfaktoren ein, welche das Arbeitsergebnis negativ beeinflussen können.

Solche Unsicherheitsfaktoren oder negative Einflußgrößen sind bspw.
- das Durchbiegen des Bohrstahles unter Belastung und das Durchbiegen oder das Rückfedern des Werkstückes, und zwar in Abhängigkeit vom Material und von der Härte des zu bearbeitenden Werkstückes, aber auch in Abhängigkeit von der Schnittgeschwindigkeit, der Schnittiefe und der Vorschubgeschwindigkeit des Bohrstahles;
- hohe Temperaturen die sich bei hoher Schnittgeschwindigkeit am Werkzeug und am Werkstück einstellen können;
- Zentrifugalkräfte, die - besonders bei relativ großer Länge der Bohrstähle - auf das Werkzeug einwirken;
- Verschleiß der Schneidspitzen und das hieraus resultierende Nachschleifen derselben.

Wenn daher in der Praxis bspw. ein exaktes Ausbohren von Löchern, also ein eng toleriertes Fertigmaß für die Löcher bzw. Offnungen gefordert wird, ist nach dem derzeitigen Stand der Technik ein umständliches Vorgehen notwendig. So wird bspw. anhand von Versuchsbohrungen zunächst ein sogenannter Vorschnitt mit starkem Materialabtrag, bspw. von 80%, durchgeführt, und zwar unabhängig davon, ob nun ein Nacharbeiten des Kernloches in einem Gußstück stattfindet, oder aber ein vorgefertigtes Bohrloch in einer Stahl-Schweißkonstruktion oder dergleichen nachgearbeitet werden soll. In einem weiteren Arbeitsgang wird dann mit einem Schälschnitt ein kleinerer Materialanteil, bspw. von 15%, abgetragen.

Das hiernach vorhandene Arbeitsergebnis ist dann im wesentlichen abhängig von dem Verhalten des für den Nachbearbeitungs-Vorgang zum Einsatz gelangten Werkzeuges - gleichgültig, ob dieses Werkzeug dabei vom Supportträger der Spindel gehalten wird oder aber als Dorn in einem Auslegerlager sitzt -.

Die Durchführung einer solchen Versuchsbohrung kann jedoch für den Maschinenführer lediglich eine Basis für das von ihm als wahrscheinlich erwartete Arbeitsresultat benutzt werden, die vor der weiteren Zusatz- und/oder Endbearbeitung notwendigerweise noch durch Messungen kontrolliert werden muß.

Erst nach der Durchführung solcher Versuchsbohrungen und der hiermit in engem Zusammenhang stehenden Kontrollmessungen kann dann der Maschinenführer, unter der Voraussetzung, daß Werkzeug und Werkstück gleich bleiben, für Nachfolgebearbei tung die Zerspannungs- und Meßvorgänge bezüglich der abzutragenden Metallmenge so bestimmen und festlegen, daß bspw. mit einem dritten Zerspannungsvorgang oder sogar mehreren weiteren Zerspannungsvorgängen die restliche Metallmenge so abgetragen wird, daß unter den gegebenen Arbeitsbedingungen ein einwandfreies End-Arbeitsergebnis eintritt. obwohl weder die exakte Radialpositionierung der rotierenden Werkzeugspitze, noch deren Radialdurchbiegung unter Belastung vorherbestimmt werden konnten.

Präzisionsbohrungen, welche unter solchen Umständen herzustellen sind. erfordern also das gesamte Wissen und Können des Maschinenführers im Hinblick auf die bei jedem einzelnen Zerspannungsvorgang abzutragende Metallmenge.

Die Notwendigkeit, durch immer kleiner ausfallende, einander nachgeschaltete Arbeitsvorgänge ein optimales Endresultat herbeizuführen, bleibt dabei zwangsläufig allein dem Maschinenführer überlassen. Er kann dann die Wahl zwischen einer großen Anzahl von Bearbeitungsschritten mit jeweils relativ kleiner Materialabtragung oder aber zwischen einer kleineren Anzahl von aufeinanderfolgenden Bearbeitungsschritten mit jeweils größerer Materialabnahme treffen. In jedem Falle bleibt aber die Gefahr, daß letztendlich die fertige Bohrung außerhalb der geforderten Toleranz liegt und somit ein Ausschußwerkstück entsteht.

Durch die Anzahl der aufeinanderfolgenden durchzuführenden Zerspanungsvorgänge wird die Bearbeitungszeit für das einzelne Werkstück in erheblichem Maße beeinflußt, und zwar auch deshalb, weil der Maschinenführer bei einer Bearbeitungstiefen-Reduzierung der aufeinanderfolgenden Zerspanungsvorgänge im beträchtlichem Maße mit der Einhaltung der Toleranzen befaßt ist.

Noch ausgeprägter wirkt sich diese auf dem Wissensstand um die exakte Radialpositionierung der rotierenden Schneidspitzen von Bohrstahl-Werkzeugen beruhende Situation für den Betrieb der ohne Menschen arbeitenden, also automatischen sowie mehr oder minder universellen Werkzeugmaschinen aus, die innerhalb sogenannter Bearbeitungszentren betrieben werden müssen.

In die Spindeln der Werkzeugmaschinen solcher Bearbeitungszentren werden nämlich für unterschiedliche Zerspanungsvorgänge auch unterschiedliche Werkzeuge eingespannt, welche speziell für den jeweiligen Zerspanungsvorgang ausgelegt und bestimmt sind. So ist es bspw. erforderlich, in die Spindel ein und derselben Werkzeugmaschine nacheinander für das Fräsen, für das Bohren, für das Gewindebohren, für das Ausbohren, für das Ansenken und gegebenenfalls auch für das Abdrehen jeweils ein anderes Werkzeug einzusetzen.

Für eine derart komplexe Gesamtbearbeitung ist daher ein automatischer Werkzeugwechsel im Übergang von einem Bearbeitungsvorgang zum anderen erforderlich. Dabei sorgt eine Werkzeug-Wechselautomatik nicht nur dafür, daß die jeweils erforderlichen Werkzeuge in der richtigen Reihenfolge nacheinander zur Maschinenspindel hin gebracht, sondern auch in diese eingesetzt sowie dadurch zentriert werden, daß der zum Werkzeughalter gehörende Befestigungskegel in einen entsprechenden Befestigungskegel der Maschinenspindel eingreift und daß sich zur Herstellung einer kraftschlüssigen und festen Verbindung zwischen dem Werkzeug und der Maschinenspindel ein zu dieser gehörender Werkzeuggreifer um den Ansatz des Werkzeughalters legt und dann das Werkzeug in die Maschinenspindel hineinzieht.

Die automatisch erfolgende Werkzeugübergabe zwischen der Maschinenspindel und den Magazintaschen einer Werkzeugwechsel-Automatik oder eines Werkzeugspeichers hat zur Folge, daß die Einspannkegel der Werkzeughalter einem Verschleiß ausgesetzt sind und daß sich auch Fremdstoffe ablagern können, die dann einem genauen Zentrieren des Werkzeughalters entgegenwirken, wenn dieser in den Einspannkegel der Maschinenspindel hineingezogen wird.

Alle diese Umstände machen die Genauigkeit einer jeden Voreinstellung der Schneidspitze eines Bohrstahl-Werkzeuges illusorisch bzw. praktisch unmöglich. Dies hat aber wiederum zur Folge, daß - abgesehen von den sich daraus ergebenden Einflüssen auf das Werkstück - die aktuelle Radialpositionierung der Werkzeugspitze schwierig ist, wenn nicht gar unmöglich gemacht wird.

Die zur Durchführung einer eng tolerierten zerspanenden Fertigbearbeitung notwendige präzise und koaxiale Ausrichtung des Schneidwerkzeuges auf die Maschinenspindel ist bei den rotierenden Schneidwerkzeugen derjenigen Art, welche in der beschriebenen Weise mit der Maschinenspindel in Wirkverbindung gebracht werden müssen, gleich schwierig.

Bei einem Fräswerkzeug, das von der präzisen Koaxialausrichtung zur Maschinenspindel abweicht, wirkt sich diese Abweichung dahingehend aus, daß dieses Fräswerkzeug verläuft und dann wegen seiner Exzentrizität zur Maschinenspindel mit einer Tiefe in das Werkstück einschneidet, die von dem für diesen Bearbeitungsvorgang programmierten Bewegungsablauf der Maschinenspindel quer zu deren Achse abweicht. Im Falle eines Stirn- bzw. Schaftfräsers stellt sich diese Abweichung vom programmierten Bewegungsablauf der Maschinenspindel entlang deren Achse ein.

Es sind zwar bereits Berührungs-Meßfühlersysteme bekannt, die es ermöglichen, unter Stillstandsbedingungen der Werkzeuge die Axialposition, die Radialposition, die Maße für die Schneidspitze eines Bohrstahles oder die Schnittbahn eines Fräswerkzeuges zu bestimmen und zu messen. Dabei wird das in die nicht rotierende Maschinenspindel eingesetzte Werkzeug mit einem Bezugspunkt-Berührungsmeßfühler angemessen. Mit derartigen, bei stillstehendem Werkzeug durchgeführten Messungen, können jedoch die sich unter Fliehkrafteinwirkung einstellenden Positionen und wirksamen Schneidradien des Schneidwerkzeuges naturgemäß nicht gemessen und bestimmt werden. Sie stellen sich jedoch bei höheren Schneiddrehzahlen und/oder bei Werkzeugen mit großer Schaftlänge ebenso in erheblichem Maße ein, wie bei Werkzeugen mit radial verstellbaren Bohrstählen, wenn deren Werkzeugeinstellung in den oberen Radialgrenzbereichen liegt.

Die Erfindung sucht nun die Unzulänglichkeiten der bekannten Meßsysteme zu beseitigen. Daher liegt der Erfindung die Aufgabe zugrunde, ein Verfahren und ein Meßsystem der eingangs spezifizierten Gattung anzugeben, welches die automatische Bestimmung des exakten Radialabstandes und der exakten Axialposition für die Schnittbahn eines rotierenden Schneidwerkzeuges ermöglicht, während dieses den Zerspanungsvorgang ausführt.

Es sollen also die bisher bestehenden Einschränkungen, Probleme und Schwierigkeiten bei der zerspanenden Metallbearbeitung weitestgehend ausgeräumt und damit die für automatisierte Bearbeitungsvorgänge noch erheblichen Unsicherheitsfaktoren beseitigt werden.

Gelöst wird diese Aufgabe erfindungsgemäß in verfahrenstechnischer Hinsicht dadurch,
daß das mit einer der Arbeits- bzw. Solldrehzahl angenäherten Meßdrehzahl angetriebene Schneidwerkzeug in den Abtast-und/oder Meßbereich eines Laserstrahles gebracht wird, daß der Laserstrahl rechtwinklig zu sich selbst in einer Abtast- und/oder Meßebene mit einer Geschwindigkeit bewegt sowie mit einer Abtastfrequenz betrieben wird, die zur Werkzeug-Meßdrehzahl ein Verhältnis hat, das einer asynchronen numerischen Mischgröße entspricht,
und daß dabei durch die bei der Laserstrahl-Abtastung aufeinanderfolgenden Abtastvorgänge der Abstand zwischen der Randkante des Abtast-und/oder Meßbereichs und der ihr nächstgelegenen Schneidwerkzeugspitze als eine Meßgröße bestimmt wird.

Dieses maschinenbezogene und genaue Erfassen der Werkzeugabmessungen während des Arbeitsbetriebes hat zur Folge, daß vom Zerspanungsvorgang jene größeren Unsicherheitsfaktoren ferngehalten werden, die bisher für diesen Vorgang kennzeichnend waren. Es ist daher nunmehr möglich, bei automatisierten Bearbeitungsvorgängen problemlos deren genauen Ablauf zu wiederholen.

Zum Messen des Durchmessers der Schnittbahn an einem einen die Abmessungen der Abtastzone unterschreitenden Schnittkreisdurchmesser aufweisenden Schneidwerkzeug ist erfindungsgemäß vorgesehen, daß die Abtast- und/oder Meßebene des Laserstrahls am größten Schnittkreisdurchmesser des Schneidwerkzeuges rechtwinklig zur Werkzeugspindelachse ausgerichtet wird und daß dabei der Abstand zwischen der Randkante des Abtast- und/oder Meßbereichs und dem Schnittkreisdurchmesser des Schneidwerkzeuges durch die kürzeste gemessene Laufzeit des Laserstrahles bestimmt wird.

Zum Messen der Schnittbahn eines einen die Abmessungen der Abtastzone unterschreitenden Schnittkreisdurchmesser aufweisenden Bohrwerkzeuges kann nach der Erfindung der Laserstrahl auf den Umlaufkreis der Schneidspitze der Schneidkörper ausgerichtet werden.

Zum Messen eines die Abmessungen der Abtastzone überschreitenden Schnittkreisdurchmessers der Schneidspitze von mit radial verstellbaren Schneidkörpern besetzten Bohrwerkzeugen wird nach der Erfindung das freie Ende des Bohrwerkzeuges mit einem Stift oder Bolzen versehen; dieser Stift oder Bolzen wird dabei parallel aber exzentrisch zur Werkzeugspindelachse vorstehend angeordnet sowie auf die Schneidspitze des Schneidkörpers ausgerichtet; danach wird der radiale Abstand zwischen dem Stift oder Bolzen und der Schneidspitze des Schneidkörpers als Meßgröße für den Schnittkreisdurchmesser bestimmt, und dann wird das Bohrwerkzeug lediglich mit dem Stift oder Bolzen in die Abtastzone und/oder Meßebene gestellt sowie darin dessen Umlaufdurchmesser durch die Laserstrahlabtastung gemessen; schließlich wird aus dem Umlaufdurchmesser des Stiftes oder Bolzens und dessen Radialabstand von der Schneidspitze des Schneidkörpers der effektive Schnittkreisdurchmesser des Bohrwerkzeuges in Summen bildender Addition ermittelt.

In verfahrenstechnischer Hinsicht ist es dabei besonders bedeutsam, daß zur radialen Abstandsmessung zwischen der Schneidspitze des Schneidkörpers und dem Stift oder Bolzen beide Teile in die Abtastzone und Meßebene des Laserstrahls gebracht werden, daß dabei die Schneidspitze des Schneidkörpers in den Bereich des Totpunktzentrums gestellt wird, und daß dann die Werkzeugspindel während aufeinanderfolgender Meßvorgänge langsam und oszillierend über einen begrenzten Bogen auf beiden Seiten des Totpunktzentrums bewegt sowie dabei die maximale Laufzeit für den zwischen der Schneidspitze des Schneidkörpers und dem Stift oder Bolzen erfolgenden Durchgang des Laserstrahls als eine Meßgröße für den Abstand zwischen der Werkzeugschneidspitze und dem Stift bzw. Bolzen gemessen wird.

Ein erfindungsgemäßes Meßsystem für die Zusammenarbeit mit in Maschinenspindeln eingespannten, rotierend angetriebenen Schneidwerkzeugen zur Durchführung des Verfahrens ist in der Hauptsache gekennzeichnet durch

- eine Laserstrahl-Sendeeinheit, deren Laserstrahl in vorgegebener Geschwindigkeit und einer einem im wesentlichen zusammengesetzten Vielfachen der Werkzeugdrehzahl entsprechenden Abtastfrequenz quer zu sich selbst längs einer Abtast- und/oder Meßebene durch eine Abtastzone bewegbar ist;
- eine lichtempfindliche Laserstrahl-Empfangseinheit, mit der das Auftreffen des bewegbaren Laserstrahles erfaßbar und aufnehmbar ist;
- eine Ausrichtvorrichtung zur gegenseitigen Zuordnung von Laserstrahl-Sendeeinheit und Laserstrahl-Empfangseinheit an einander gegenüberliegenden Seiten der Spindelachse, mit deren Hilfe die Abtast- und/oder Meßebene innerhalb der Abtastzone durch das Schneidwerkzeug abschattend unterbrechbar ist;

- und eine Meßvorrichtung, mit der die kürzeste Laufzeit des Laserstrahles und der Laserstrahl-Sendeeinheit zur Laserstrahl-Empfangseinheit beim Abtasten des Abtastzonenrandes und der diesem nächstgelegenen Schneidwerkzeugspitze erfaßbar sowie als Abstand zwischen dem Abtastzonenrand und der betreffenden Schneidwerkzeugspitze meßbar ist.

Die Erfindung sieht, z.B. bei einer Bohrmaschine oder einem gleichwertigen Bearbeitungszentrum, in der Nähe des Arbeitsbereiches der Maschinenspindel ein Laserstrahl-Abtastungssystem vor, welches das rotierende Werkzeug dann mit einem Laserstrahl abtastet und mißt, wenn die Maschinenspindel mit der Schnittdrehzahl oder fast mit der Schnittdrehzahl angetrieben, als in Umdrehung versetzt wird. Zur Gewährleistung einer genauen Bestimmung der präzisen Radialposition der rotierenden Schneidspitze des Werkzeuges wird dann diese Drehzahl im Hinblick auf die Abtastfrequenz des Laserstrahl-Abtastsystems entsprechend ausgewählt.

Nach einem weiteren Erfindungsgedanken ist das Meßsystem dadurch gekennzeichnet, daß für das Messen eines die Abmessungen der Abtastzone unterschreitenden Schnittkreisdurchmessers des Werkzeuges

- die Abtast- und/oder Meßebene rechtwinklig zur Achse der Werkzeugspindel ausgerichtet ist, wobei sie beim größten Schnittkreisdurchmesser mit der Drehebene des Werkzeuges zusammenfällt, und dabei ist

- die zwischen dem Abtasten des jeweiligen Abtastzonenrandes und dem Auftreffen auf die nächstgelegene Schneidwerkzeugspitze verstreichende Laufzeit des Laserstrahles als maximaler Schnittkreisdurchmesser meßbar.

In einem solchen Falle kann dabei erfindungsgemäß für das Messen des Umlaufdurchmessers der Schneidwerkzeugspitze der maximale Schnittkreisdurchmesser den Drehebenen-Durchmesser der Schneidwerkzeugspitze bilden.

Nach einem anderen Lösungsvorschlag der Erfindung zeichnet sich das Meßsystem dadurch aus, daß für das Messen eines die Abmessungen der Abtastzone überschreitenden Schnittkreisdurchmessers des Werkzeuges

- das freie Ende des Werkzeuges einen parallel zur Werkzeugspindelachse vorstehenden Stift oder Bolzen trägt, der mit seiner Längsachse zur Werkzeugspindelachse exzentrisch angeordnet und auf die Schneidwerkzeugspitze ausgerichtet sowie in die Abtastzone und/oder Meßebene stellbar ist, und daß dabei

- dieser Stift oder Bolzen einen vorgegebenen Radialabstand zu der Schneidwerkzeugspitze aufweist, durch den die Meßgröße für den Schnittkreisdurchmesser bestimmt ist.

Das erfindungsgemäße Meßsystem ist ferner gekennzeichnet durch zwei im Abstand zueinander angeordnete Begrenzungselemente für den Abtastzonenrand, mittels denen der Strahlengang des Laserstrahls zur Laserstrahl-Emfangseinheit hin abschattbar und unterbrechbar ist.

Die Erfindung sieht ferner aber auch noch vor, daß bei parallel zur Werkzeugspindelachse ausgerichteter Abtast-und/oder Meßebene die axiale Position der Schneidwerkzeugspitze mit vom Abtastzonenrand zu einer Schneidwerkzeugspitze geführter Laserstrahl-Abtastung meßbar ist.

Als andere, wichtige Weiterbildungsmaßnahme der Erfindung ist noch vorgesehen, daß die Laserstrahl-Sendeeinheit und die Laserstrahl-Empfangseinheit dreh- oder schwenkbar angeordnet sowie wahlweise rechtwinklig oder parallel zur Werkzeugspindelachse ausrichtbar sind.

Schließlich hat es sich im Rahmen der Erfindung aber auch noch als vorteilhaft erwiesen, wenn die Werkzeugdrehzahl zur Abtastfrequenz des Laserstrahls in ein Verhältnis setzbar ist, das einer asynchronen, numerischen Mischgröße ent spricht, die z.B. bei max. (7.200/8 + 7) und bei min. (7.200/72 + 7) liegt, also max. 1:7,9382579 und min. 1:67,289719 ausmacht.

Das erfindungsgemäße Verfahren und das Meßsystem zu seiner Ausübung kann auch in Verbindung mit Messerköpfen, Zirkularbohrfräsern und Wälzfräsern zum Einsatz gelangen, bei denen es auf die Bestimmung und Messung des Durchmessers der Schnittbahn ankommt. Es läßt sich dann jede Fehlanpassung des Schneideinsatzes im Fräserkörper oder das Verlaufen des Fräswerkzeuges eliminieren, wenn dieses nicht koaxial zur Maschinenspindel ausgerichtet ist. Durch abgewogene Neuorientierung der Abtastebene kann das Laserstrahl-Abtastsystem auch die Axialenden der Schnittbahn eines Fräswerkzeuges bestimmen, wie das sowohl beim Planfräsen als auch beim Stirnfräsen wichtig ist.

Anhand der Zeichnung wird ein Ausführungsbeispiel der Erfindung nachfolgend näher erläutert. Es zeigen

Figur 1 die perspektivische Darstellung eines Horizontalspindel-Bearbeitungszentrums mit in die Spindel eingesetztem Bohrstahl und einem maschinenfesten Laserstrahl-Abtastsystem,

Figur 2 in größerem Maßstab die Stirnansicht des Laserstrahl-Abtastsystems,

Figur 3 einen Schnitt entlang der Linie 3-3 der Fig. 2,

Figur 4 die Darstellung eines Meßvorgangs an einem Bohr-oder Fräswerkzeug mit festliegendem Schnittkreisdurchmesser, der innerhalb der physikalischen Grenzen eines vorgegebenen Abtastbereiches liegt,

Figur 5 in größerem Maßstab einen Längsschnitt durch den in die Maschinenspindel eingesetzten, einstellbaren Bohrstahl nach Fig. 1,

Figuren 6 und 7 die Darstellung einer mit einstellbaren Bohrstählen zusammenwirkenden Meßanordnung in Axialrichtung zum Bohrstahl und zur Spindel gesehen, die

Figuren 8A bis 8C ein Funktionsablaufdiagramm des Programmeinsatzes eines für das Konditionieren des Bearbeitungszentrums bestimmten Teilprogrammes eines rechnergestützten, numerischen Steuerungsprogrammes und einen zugehörigen, maschinenverbundenen Mikrocomputer für das automatische Messen des Schneidwerkzeuges als einen Teil des Teilprogrammes für das zu bearbeitende Werkstück und die

Figuren 9A bis 9C ein Funktionsablaufdiagramm für das Programm des zuvor erwähnten Mikrocomputers als Teil des Meßsystems.

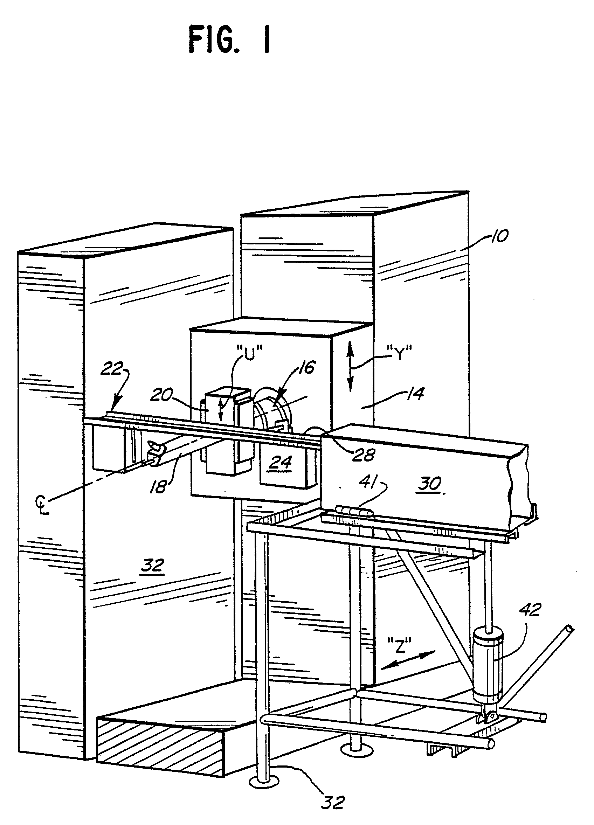

In Fig. 1 der Zeichnung ist ein Bohrwerk oder ein Bearbeitungszentrum als Teil einer zumindest vier Bewegungsachsen aufweisenden Maschine wiedergegeben, deren Maschinenständer 10 auf dem Maschinenbett 12 montiert ist. Der Maschinenständer 10 kann dabei mit einer gesteuerten und geregelten Bewegung in Achsrichtung der Maschinenspindel 16, also in Richtung der sogenannten Z-Achse verfahren werden, wie das in Fig. 1 durch den Doppelpfeil Z angedeutet ist. Der Spindelkopf 14 kann mit der von ihm gelagerten Maschinenspindel 16 in Vertikalrichtung und damit längs der sogenannten Y-Achse entsprechend dem Doppelpfeil Y, bewegt und verfahren werden. Der Schnittkreisdurchmesser des mit Hilfe eines einstellbaren Werkzeughalters 20 in die Maschinenspindel 16 eingesetzten Bohrstahles 18 kann von einem sowohl mit dem Spindelkopf 14 als auch mit dem Werkzeughalter 20 zusammenarbeitenden Antriebssystem für die U-Achse in Richtung des Doppelpfeiles U eingestellt und justiert werden.

Weder der mit einer horizontalen Linearbewegung im rechten Winkel zur Achse der Maschinenspindel 16, also in Richtung der X-Achse verstellbare Maschinentisch, noch das vom Bohrstahl 18 zu bearbeitende Werkstück sind jedoch in Fig. 1 der Zeichnung zu sehen, weil sie für die Erläuterung der Erfindung nicht erforderlich sind.

Es leuchtet ein, daß dann, wenn das Bohrwerk oder Bearbeitungszentrum sich im Bohrbetrieb befindet, der Bewegungsablauf der automatisch gesteuerten und geregelten Bewegungsachsen im wesentlichen auf die zwischen dem Bohrstahl 18 und dem Werkstück längs der Z-Achse ablaufende Bewegung beschränkt. während alle anderen Bewegungsachsen vornehmlich für andere Bearbeitungsvorgänge oder für Positionierungsbewegungen zwischen den Bearbeitungsvorgängen vorgesehen sind.

Demgegenüber wird bei einem Fräsvorgang die Bewegung längs der Z-Achse im wesentlichen nur für das Einstellen der axialen Schnittiefe verwendet, in geringem Maße aber auch beim sogenannten Einsteckverfahren unter Benutzung von Stirn-bzw. Schaftfräsern, wobei dann die Werkzeug-Zustellbewegung für den Schneidvorgang entlang einer oder mehrerer der beiden anderen geradlinigen Achsen, also der X-Achse und der Y-Achse, erfolgt.

In einer festen Abstandszuordnung zum Maschinenbett 12 ist das Laserstrahl-Meßsystem 22 angeordnet, welches nach dem erfindungsgemäßen Verfahren die mit dem Arbeiten der Schneidwerkzeuge, bspw. einem Bohrstahl 18, in Zusammenhang stehenden Messungen vorzunehmen hat.

Zu dem Laserstrahl-Meßsystem 22 gehört dabei eine Laserstrahl-Sendeeinheit 24, die bei den meisten Meßvorgängen einen Laserstrahl in einer zur Achse der Maschinenspindel 16 rechtwinklig ausgerichtete Ebene abstrahlt. Durch Drehen eines in der Laserstrahl-Sendeeinheit 24 angeordneten und motorisch angetriebenen Spiegels wird dabei der Laserstrahl rechtwinklig zu sich selbst innerhalb der Abtast- und/oder Meßebene verschoben.

Eine Laserstrahl-Empfangseinheit 26 ist relativ zur Laserstrahl-Sendeeinheit 24 so angeordnet und montiert, daß ihre längliche und lichtempfindliche Fotodiode das Laserstrahllicht empfangen und aufnehmen kann, welches im Meßbereich nicht von einem darin befindlichen Werkzeug abgefangen und zurückgehalten wird.

Zum Laserstrahl-Meßsystem 22 gehört aber auch noch eine -hier nicht dargestellte - dritte Grundeinheit, nämlich eine elektronische Kopplungseinheit (electronic coupler) mit Motor-Steuerschaltungen zum Steuern und Regeln des Meßstrahles und der Abtastfrequenz, mit Meßschaltungen zum Aufnehmen und Erfassen der Auftreffdauer des beweglichen Laserstrahles auf die Fotodiode der Laserstrahl-Emfangseinheit 26 und mit einem zentralen Rechensystem (CPU) mit den ihm zugehörigen elektrischen Schaltkreisen für die Umwandlung der zwischen den Randzonen-Meßsignalen verstrichenen Zeit in Linearabmessungen.

Die Erläuterungen hierzu werden noch an anderer Stelle der Beschreibung gegeben.

Als Abtastsystem gelangt ein telemetrisches Laserstrahl-Meßsystem zum Einsatz, wie es bspw. von der Zygo Corporation in Middlefield Connecticut hergestellt und vertrieben wird. Das eigentliche Abtastsystem ist jedoch kein Bestandteil der Erfindung.

Damit das Laserstrahl-Meßsystem 22 das rotierende Bohrwerkzeug 18 messen und erfassen kann, sind seine Sendeeinheit 24 und Empfangseinheit 26 auf einer verschiebbaren Schiene 28 montiert, und zwar derart, daß sie sich normalerweise unter einem relativ hohen Abdeckgehäuse 30 auf einer Seite der Maschine befinden. Vom Abdeckgehäuse 30 aus kann das Laserstrahl-Meßsystem 22 über die Achse der Maschinenspindel 16 hinaus verfahren werden, damit zwischen der Sendeeinheit 24 und der Emfangseinheit 26 eine Meßstrecke entsteht. Bei aus dem Abdeckgehäuse 30 herausgefahrener Montageschiene 28 muß dann die Maschinenspindel 16 in Richtung der Y-Achse bewegt und verfahren sowie durch eine entsprechende Bewegung des Maschinenständers 10 in Richtung der Z-Achse in die Abtast-und/oder Meßebene hineingebracht oder aus dieser herausbewegt werden. Bei einem für die praktische Erprobung erstellten Prototyp-System hat die Laserstrahl-Empfangseinheit 26 des aus dem Gehäuse 30 herausgefahrenen Laserstrahl-Meßsystems 22 den größeren Abstand, hingegen die Laserstrahl-Sendeeinheit 24 den kleineren Abstand zum Gehäuse 30, wie das ohne weiteres der Fig. 1 zu entnehmen ist.

Werden keine Laserstrahl-Messungen durchgeführt, befindet sich das gesamte Laserstrahl-Meßsystem 22 im zurückgefahrenen Zustand und damit innerhalb des zu seinem Schutz vorgesehenen Gehäuses 30.

Die Schiene 28 wird von einem im Gehäuse 30 angeordneten und verfahrbaren Haltesystem in freitragender Weise gehalten. Damit das Laserstrahl-Meßsystem 22 während des Meßvorgangs auftretenden Vibrationen und Stößen nicht unnötig stark ausgesetzt ist, wird das Untergestell 32 des Gehäuses 30 vorzugsweise nicht fest mit dem Maschinenbett 12 verbunden.

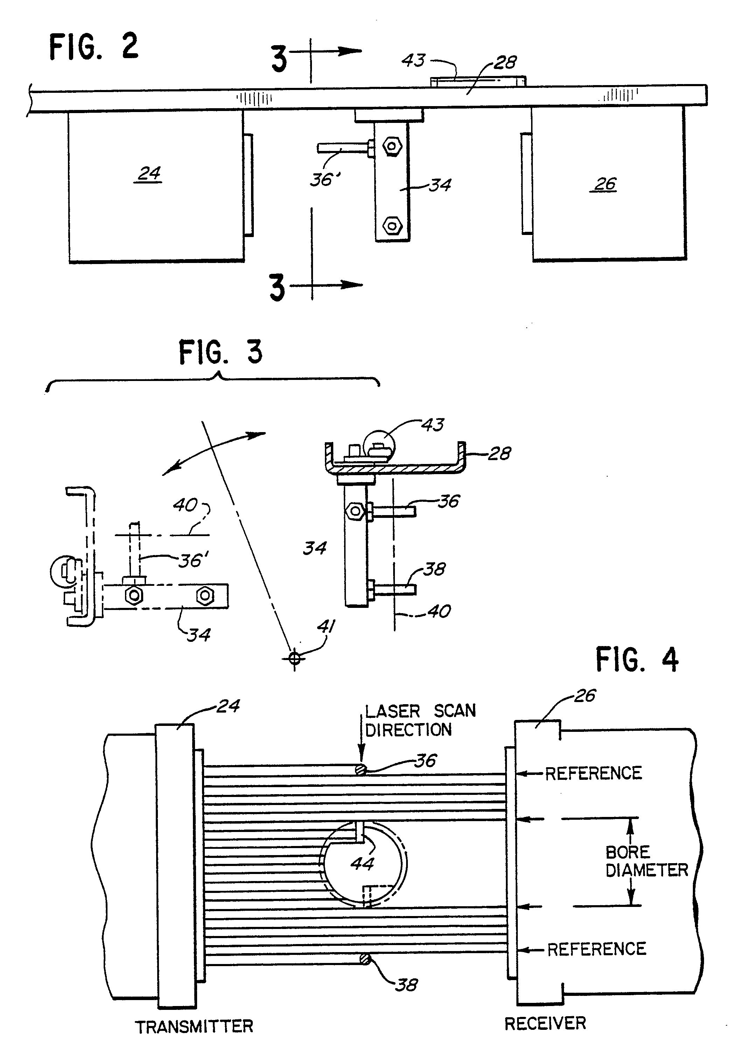

Wie besonders deutlich aus Fig. 2 hervorgeht, ist an der Schiene 28 zwischen der Laserstrahl-Sendeeinheit 24 und der Laserstrahl-Empfangseinheit 26 noch eine nach abwärts gerichtete Leiste 34 befestigt, von der im Abstand zueinander zwei geschliffene und relativ zueinander lagenfixierte Stifte oder Bolzen 36 und 38 abstehen. Diese Stifte oder Bolzen 36 und 38 ragen dabei in die Abtast-und/oder Meßebene 40 hinein, und zwar so, daß sie für die mit dem Laserstrahl zu tätigenden Messungen die Abtast- bzw. Meßlänge genau festlegen. Die Stifte oder Bolzen 36 und 38 sind hierzu an der Leiste 34 befestigt, welche ihrerseits wiederum fest an der Schiene 28 des ein- und ausfahrbaren Laserstrahl-Meßsystems 22 angebracht ist.

Damit das Laserstrahl-Meßsystem die genaue Axialposition der Schneidspitze 48 eines Fräswerkzeuges 50 anmessen und ermitteln kann, ist das Gehäuse 30 auf dem Untergestell 32 mittels eines Scharniers 41 derart gehalten, daß es über einen Winkel von 90° geschwenkt werden kann und sich dadurch die Abtast- und/oder Meßebene 40 entsprechend verlagern läßt. Statt quer zur Achse der Maschinenspindel 16 kann sie daher auch parallel hierzu ausgerichtet werden, wie das in Fig. 3 der Zeichnung durch strichpunktierte Linien angedeutet ist. Das Gehäuse 30 des Laserstrahl-Meßsystems 22 läßt sich auf seinem Untergestell 32 durch einen doppelt wirkenden Hydraulikzylinder zwischen den beiden möglichen Positionen schwenken, wobei der Hydraulikzylinder wiederum über ein Magnetventil entsprechend angesteuert werden kann.

Da bei einem später noch beschriebenen Meßverfahren nur mit einem Aquivalent des oberen Stiftes bzw. Bolzens 36 gearbeitet wird, ist der Stift bzw. Bolzen 38 aus der Leiste 34 entfernbar oder herausziehbar vorgesehen. Hierzu wird mit einer um die Achse der Leiste 34 führenden Vierteldrehung derselben sowohl der Stift bzw. der Bolzen 36 als auch der Stift bzw. Bolzen 38 aus der Abtast- und/oder Meßebene 40 entfernt und stattdessen nur ein einzelner oberer Stift oder Bolzen 36' in diese Abtast- und/oder Meßebene 40 hineingebracht.

Ein kleiner Hydraulikzylinder 43 wirkt auf einen Hebelarm ein, welcher über der Schiene 28 mit der Leiste 34 verbunden ist. Er wird zum Schwenken des gesamten Systems um die Scharniere 42 eingesetzt.

Mit Hilfe der Bolzen 36, 36' und 38 wird die Randzone im Bereich des anzumessenden Werkzeuges 18 genau definiert und bestimmt.

Es besteht aber Grund zu der Annahme, daß die Laserstrahl-Meßverfahren in der Zukunft so weiterentwickelt werden, daß Eingrenzungsmasken, wie sie durch die Stifte oder Bolzen 36, 36' und 38 gebildet werden, im Werkzeugbereich dann wegfallen können.

Das für den einfachsten Fall einsatzfähige Laserstrahl-Meßverfahren läßt sich anhand der Fig. 4 der Zeichnung beschreiben. Hierin ist gezeigt, daß die Laserstrahl-Sendeeinheit 24 auf der linken Seite und die Laserstrahl-Empfangseinheit 26 auf der rechten Seite liegt und daß zwischen ihnen die Laserstrahl-Abtastung oder Laserstrahl-Messung in Richtung von oben nach unten erfolgt. Die Wirkrichtung des Laserstrahls ist dabei in Fig. 4 durch den senkrechten Pfeil angedeutet, während zueinander parallele Linien den Abtast-und/oder Meßbereich andeuten.

Beim Meßverfahren nach Fig. 4 verläuft die Schnittbahn der Spitze des Werkzeuges 44 völlig innerhalb des vorgesehenen Abtast- und/oder Meßbereichs, weil ihr Durchmesser die größte vorkommende Abtast- oder Meßlänge deutlich unterschreitet. Deshalb liegt hier ein besonders einfacher Fall des Meßverfahrens vor.

Bei dem Meßverfahren wird die Linearabmessung aus der Zeit, welche zwischen dem ersten Auftreten des Lichtstrahles auf die Fotodiode und dem durch einen abschattenden, lichtundurchlässigen Gegenstand verursachten Ausblenden des Lichtstrahles verstreicht, abgeleitet. Um das zu ermöglichen, muß daher die Abtast- und/oder Meßzone mit Hilfe einer Maske genau und präzise begrenzt werden, welche im vorliegenden Falle, wie bereits oben beschrieben worden ist, von den beiden Stiften oder Bolzen 36 und 38 gebildet ist. Diese Stifte oder Bolzen 36 und 38 sind dabei an der von der Schiene 28 aus nach unten gerichteten Leiste 34 angebracht und hinsichtlich ihrer Länge derart bemessen, daß sie am Anfang und am Ende eines jeden Abtastvorgangs die Weiterführung des abtastenden Laserstrahles verhindern.

Bei diesem Meßverfahren wird in einem ersten Meßschritt der genaue Abstand zwischen den als Masken wirkenden Stiften oder Bolzen 36 und 38 bestimmt und festgelegt. Dann wird das Schneidwerkzeug 50 auf eine Drehzahl hochgefahren, die annähernd seiner Arbeitsdrehzahl entspricht. Zur abschattenden Unterbrechung der Abtast- und/oder Meßebene 40 wird es sodann mit einer in Richtung der Z-Achse erfolgenden und sehr langsam stattfindenden Bewegung des Maschinenständers 10 in den Meßbereich des Laserstrahles hineingebracht.

Dabei soll die langsame Bewegung in Richtung der Z-Achse gewährleisten, daß der in Radialrichtung äußerste Teil der Schneidwerkzeugspitze zwecks Erzielung eines exakten Meßresultates die Abtast- und/oder Meßebene 40 genügend lange abschattend unterbricht.

Während des eigentlichen Meßvorganges mißt dann das Laserstrahl-Meßsystem 22
- einerseits die Zeit, welche nach dem Einfallen des zunächst einmal durch den oberen Stift oder Bolzen 36 abschattend unterbrochenen Meßstrahles in die Laserstrahl-Empfangseinheit 26 und der erneuten abschattenden Unterbrechung dieses Meßstrahles durch die Schneidwerkzeugspitze 44 in deren oberem Totpunktzentrum verstreicht,
- und andererseits die Zeit, welche unterhalb der Schneidwerkzeugspitze 44 und deren unterem Totpunktzentrum nach dem erneuten Einfallen des Meßstrahles in die Laserstrahl-Empfangseinheit 26 bis zum abschattenden Unterbrechen des Meßstrahles durch den unteren Stift oder Bolzen 38 verstreicht.

Den Schnittbahn-Durchmesser der Schneidwerkzeugspitze 44 erhält man dann
- durch die Addition des zwischen dem oberen Stift oder Bolzen 36 und der Werkzeugspitze 44 am oberen Totpunktzentrum gemessenen Abstandes mit dem Abstand, welcher am unteren Totpunktzentrum zwischen der Schneidwerkzeugspitze 44 und dem unteren Stift oder Bolzen 38 gemessen worden ist,
- und durch deren Subtraktion von dem zuvor gemessenen und vorhandenen Abstand zwischen den beiden Stiften oder Bolzen 36 und 38.

Bei dem versuchsweise zum Einsatz gebrachten Laserstrahl-Meßsystem 22 arbeitet die Laserstrahl-Sendeeinheit 24 mit einer Abtastfrequenz von 120 Hz, also mit 7200 Abtastvorgängen pro Minute. Um für die Abbildung der zu messenden Schneidwerkzeugspitze 44 einen stroposkopischen Stillstandseffekt zu vermeiden, ist in Arbeits-Drehrichtung des Schneidwerkzeuges 50 für die Maschinenspindel 16 eine zur Abtastfrequenz asynchrone Drehzahl einzustellen. Diese Drehzahl ist dabei zweckmäßigerweise entsprechend einem Wert einzustellen, der einer Fakultät von 7200 entspricht und dabei der jeweiligen Arbeitsdrehzahl für das Schneidwerkzeug 50 sehr nahekommt. Zu dem so ermittelten Drehzahlwert wird dann noch eine niedrige Drehzahl, bspw. von 7 Umdrehungen pro Minute hinzugefügt, um die wirkliche Arbeitsdrehzahl für das Schneidwerkzeug 50 zu bilden.

Hierdurch erhält man für das Verhältnis von Abtastfrequenz zur Arbeitsdrehzahl des Schneidwerkzeuges 50 eine asynchrone numerische Mischgröße, welche gewährleistet, daß sie die Abbildung der Schneidwerkzeugspitze 44 langsam genug durch das Totpunktzentrum bewegen kann, um zur Erzielung höchster Genauigkeit Messungen in ausreichender Anzahl durchführen zu können.

Damit bspw. bei einer vorgegebenen Schneidgeschwindigkeit von 300 U/min die Schneidwerkzeugspitze 44 innerhalb einer begrenzten Abtastperiode von bspw. 15 bis 30 sec bemessen und befaßt werden kann, würde die tatsächliche Drehzahl der Maschinenspindel 16 dann auf einen Wert von 307 U/min eingestellt.

Die gleiche Verfahrensart kann auch für die Kontrolle des Verlaufens eines Fräswerkzeuges aus der vorgegebenen Schnittbahn angewendet bzw. eingesetzt werden, wenn dieses Fräswerkzeug in den von den Stiften bzw. Bolzen 36 und 38 definierten Abtast- und/oder Meßbereich paßt.

Da das Laserstrahl-Meßsystem 22 in der Regel mit einer begrenzten Abtast- bzw. Meßlänge arbeitet, die bspw. bei etwa 100 mm (4") liegt, und durch die Stifte bzw. Bolzen 36 und 38 noch eingeengt ist, wird zum Messen von Schneidwerkzeugen, insbesondere Bohrstellen 50 für das Bohren bzw. Ausbohren von Bohrungen, die einen größeren Durchmesser haben, ein anderes Meßverfahren angewendet.

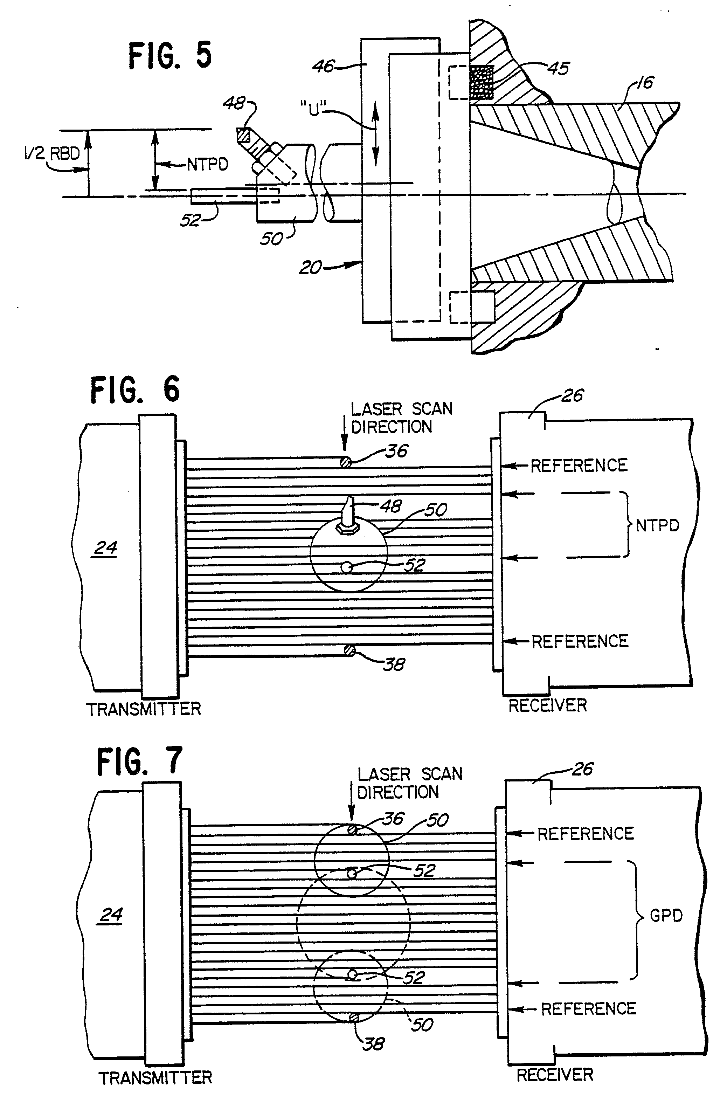

Dieses Meßverfahren ist in den Fig. 5, 6 und 7 der Zeichnung dargestellt und wird nachfolgend beschrieben bzw. erläutert.

Fig. 5 zeigt dabei den in die Maschinenspindel 16 eingesetzten Werkzeughalter 20. In diesen Werkzeughalter 20 greift der Antriebszapfen 45 des Antriebs für die U-Achse ein, welcher über ein Getriebe mit einer von der Maschinenspindel 16 unabhängigen Relativdrehung auf eine Stellspindel einwirkt. Es kann hierdurch der Umlaufradius der Schneidwerkzeugspitze 48 eines in den beweglichen Teil 46 des Werkzeughalters 20 eingesetzten Bohrstahles 50 in Radialrichtung vergrößert oder verkleinert werden. Dabei haben derartige Werkzeughalter 20 mehrere Einstecköffnungen für die Aufnahme des Bohrstahles 50 und können daher für die zu erstellenden Bohrungen einen beträchtlichen Abmessungsbereich abdecken.

Für herzustellende Bohrungen, die in ihren Abmessungen größer sind als der Meßbereich des verfügbaren Laserstrahl-Meßsystems 22 wird daher der Umlaufradius der Schneidwerkzeugspitze unter Anwendung des abweichenden Meßverfahrens schrittweise gemessen und bestimmt, wie dies in den Fig. 6 und 7 gezeigt ist und nachstehend erläutert wird.

Nach Fig. 5 wird der Meßvorgang mit Hilfe eines, vorzugsweise zylindrisch geschliffenen, vorstehenden Stiftes oder Bolzens 52 durchgeführt, der am freien Ende des Schneidwerkzeuges 50 in eine dafür vorgesehene Aufnahmebohrung eingesetzt ist, die nicht unbedingt auf der Mitte des freien Werkzeugendes liegen muß. Die Achse des Stiftes oder Bolzens 52 muß aber zusammen mit der Schneidwerkzeugspitze 48 auf einen gemeinsamen Bohrstahldurchmesser ausgerichtet sein und die Ebene der eigentlichen Schneidwerkzeugspitze 48 in der Abtast-und/oder Meßebene 40 schneiden. Darüber hinaus müssen beide zusammen mit dem verstellbaren Teil 46 des Werkzeughalters 20 auf einen Spindeldurchmesser ausgerichtet werden.

Beim Meßvorgang wird dann folgendermaßen verfahren:
- Zunächst wird der Abstand zwischen den Stiften bzw. Bolzen 36 und 38 neu festgelegt.
- Sodann wird der Bohrstahl 50 in Richtung der Z-Achse so weit vorgefahren, daß der Stift oder Bolzen 52, welcher der Schneidebene der Schneidwerkzeugspitze um ein beträchtliches Maß voreilt, in die Abtast- und/oder Meßebene 40 gelangt und diese schneidet.
- Während die Schneidwerkzeugspitze 48 während einer Zeitdauer von etwa 1 Minute mit einer Geschwindigkeit von etwa 1,2 bis 1,3 mm pro Minute (0,05"/min), also langsam, durch die Abtast-und/oder Meßebene gefahren wird, wird gleichzeitig der Schaft des Bohrstahles 50, ebenfalls ganz langsam, hin- und herbewegt, während der Meßvorgang stattfindet. Beim Meßvorgang wird dann der zwischen der Schneidwerkzeugspitze 48 und der Oberkante des Stiftes oder Bolzens 52 gegebene Abstand NTPD in der bereits weiter oben beschriebenen Art und Weise ermittelt.

Die zum Laserstrahl-Meßsystem 22 gehörende zentrale Verarbeitungseinheit mißt und speichert dabei für den zwischen der Schneidwerkzeugspitze 48 und der Oberkante des Stiftes bzw. Bolzens 52 gegebenen Abstand NTPD den größten ermittelten Meßwert.

Nach der Beendigung dieses Meßvorgangs wird der Bohrstahl 50 entlang der Z-Achse wieder zurückgefahren, um den Stift oder Bolzen 52 aus dem Bereich der Stifte 36 und 38 herauszubringen, während der Bohrstahl 50 auf seine Arbeitsdrehzahl oder aber eine dieser nächstgelegene Umlaufdrehzahl hochgefahren wird, die nahezu eine fakultative Größe der wirksamen Abtastfrequenz ist.

Nunmehr wird durch eine in Richtung der Y-Achse stattfindende Positionierung des Spindelkopfes 14 die Spindelachse vertikal zur Abtast-und/oder Meßebene 40 ausgerichtet, und dann in Richtung der Z-Achse wieder so lange vorgeschoben, bis der rotierende Stift oder Bolzen 52 die Abtast- und/oder Meßebene 40 abschattend unterbricht. In dieser Position sollte dann der Stift oder Bolzen 52 für die Dauer von 15 bis 30 Sekunden verweilen und die Möglichkeit bieten, den Durchmesser GPD der Umlaufbahn des Stiftes bzw. Bolzens 52 zu messen.

Bei diesem Meßverfahren ergibt die Summe aus der Addition des Durchmessers GPD mit dem doppelten Meßwert für den Abstand NTPD zwischen der Schneidwerkzeugspitze 48 und dem Stift oder Bolzen 52 den Durchmesser für die rotierende Schneidwerkzeugspitze 48. Dieser Meßwert wird mit dem für den Durchmesser der Schnittbahn programmierten Wert verglichen.

Wenn Toleranzabweichungen eine erneute Einstellung der Schneidwerkzeugspitze 48 erforderlich machen, dann geschieht dies
- durch eine steuernde und regelnde Einwirkung auf die U-Achse
- und durch eine erneute Messung des Durchmessers GPD der Umlaufbahn des Testbolzens 52, mit welcher mathematisch festgestellt werden soll, ob die Nachstellung der Werkzeugschneidenspitze 48 sich für das Zurückführen des Schnittbahndurchmessers RBD in den Toleranzrahmen als wirksam erwiesen hat.

Wenn die Länge eines in die Maschinenspindel 16 eingesetzten Fräswerkzeuges kontrolliert werden soll, dann wird
- das Laserstrahl-Meßsystem 22 durch einen Schwenkvorgang in die in Fig. 3 gestrichelt wiedergegebene andere Arbeitslage gebracht;
- mit einer in Richtung der Y-Achse erfolgenden, erneuten Höheneinstellung das Fräswerkzeug in eine Position gebracht, in welcher es die Abtast-und/oder Meßebene 40 des jetzt horizontal ausgerichteten Laserstrahl-Meßsystems 22 schneidet;
- mit einer Bewegung in Richtung der Z-Achse die Werkzeugspindel 16 so verfahren, daß die Schneidwerkzeugspitze 48 in der Abtast- und/oder Meßebene 40 in eine vorgegebene Nennposition gelangt;

- bei einem in der horizontal ausgerichteten Abtast- und/oder Meßebene 40 vertikal nach oben ausgerichteten, alternativen Stift oder Bolzen 36′ der Abtast- oder Meßvorgang vom Stift oder Bolzen 36′ aus zur Werkzeugspindel 16 hin durchgeführt, wobei der Abstand zwischen dem Stift oder Bolzen 36′ und der Schneidwerkzeugspitze 48 gemessen wird und wobei ein von der zentralen Verarbeitungseinheit des Laserstrahl-Meßinstrumentes 22 zur Verfügung gestelltes Alternativ-Programm verwendet wird.

An der Steuerung und Regelung der beschriebenen Meßvorgänge sind beteiligt:

- ein rechnergestütztes, numerisches Steuer- und Regelsystem (CNC-System) der Maschine,
- eine zum Laserstrahl-Meßsystem 22 gehörende Mikroprozessor-Einheit an der zentralen Datenverarbeitungseinheit (CPU),
- und ein für die Summenbildung zuständiger Schnittstellen-Mikrocomputer (MIC).

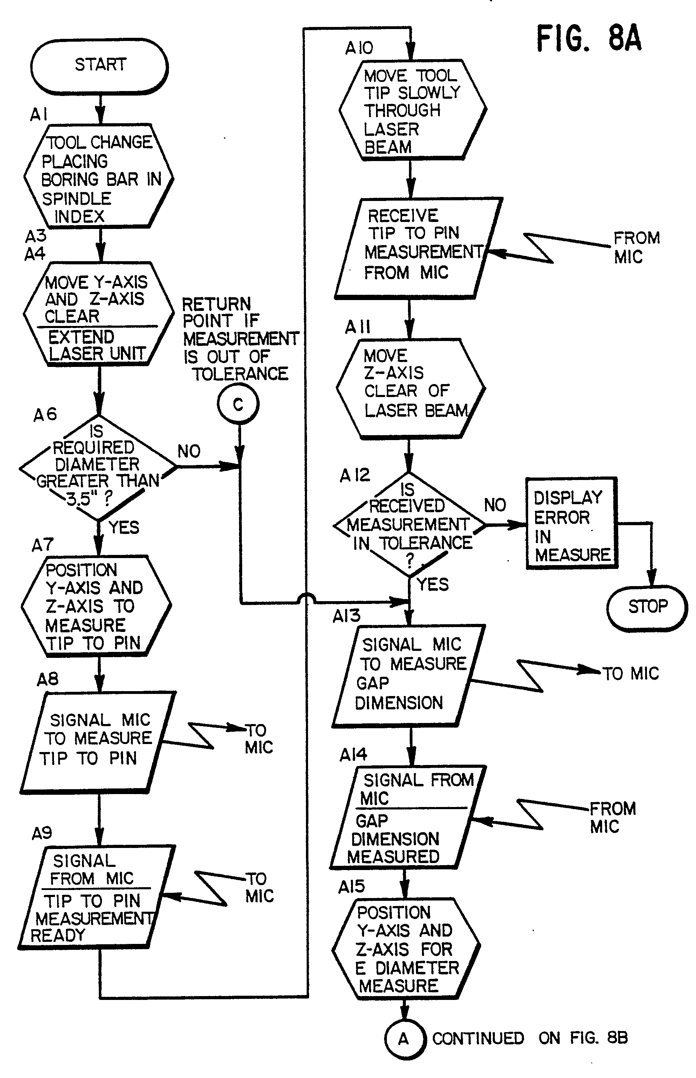

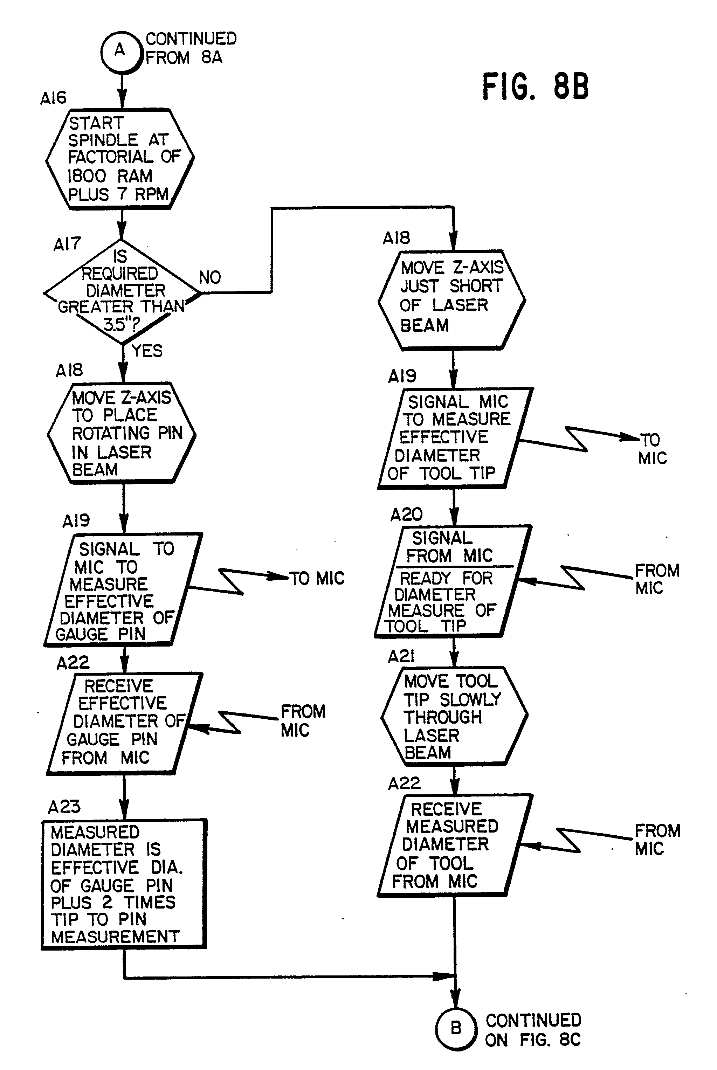

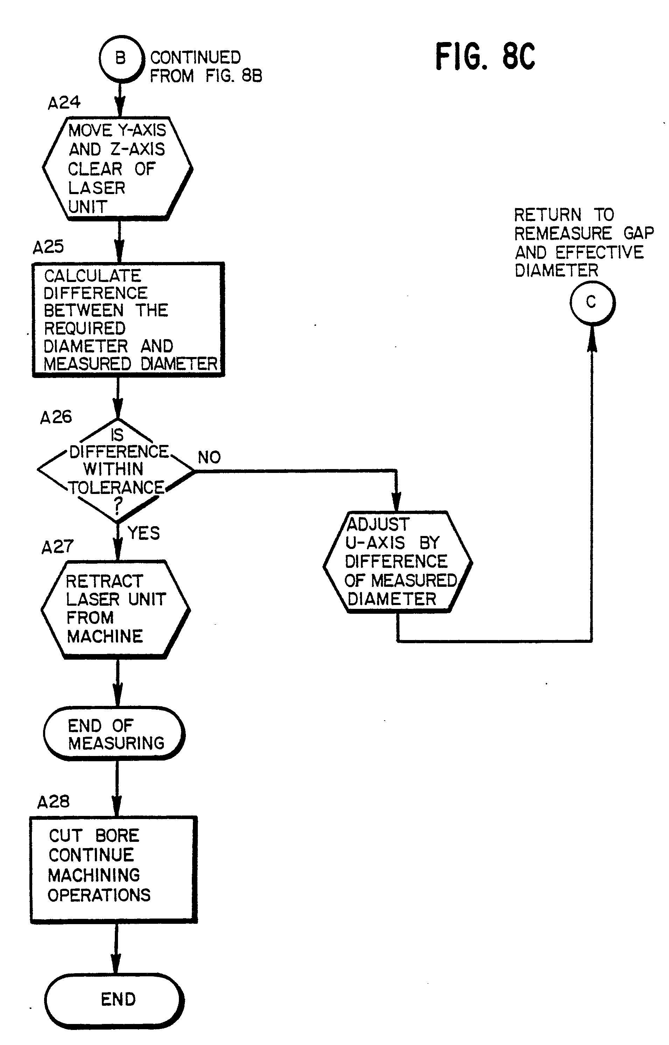

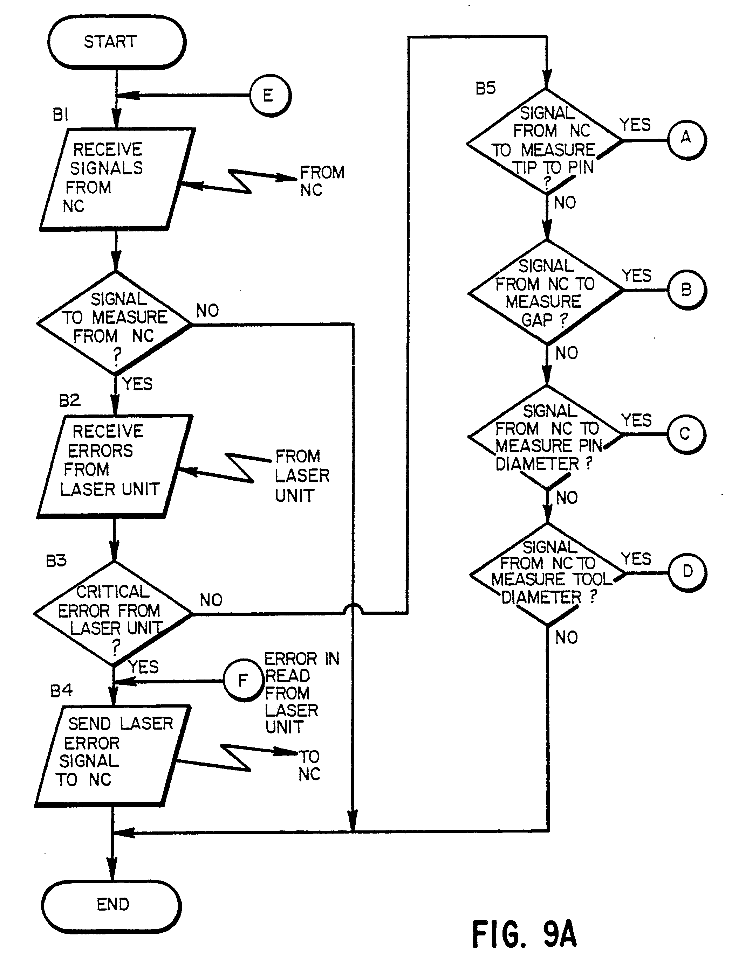

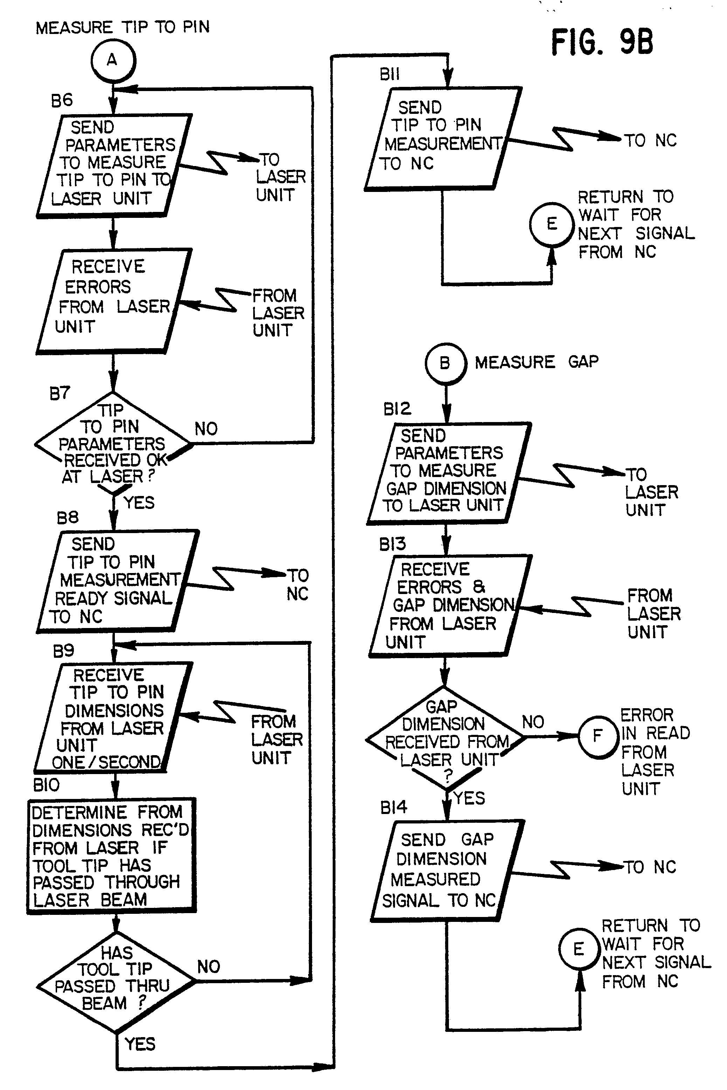

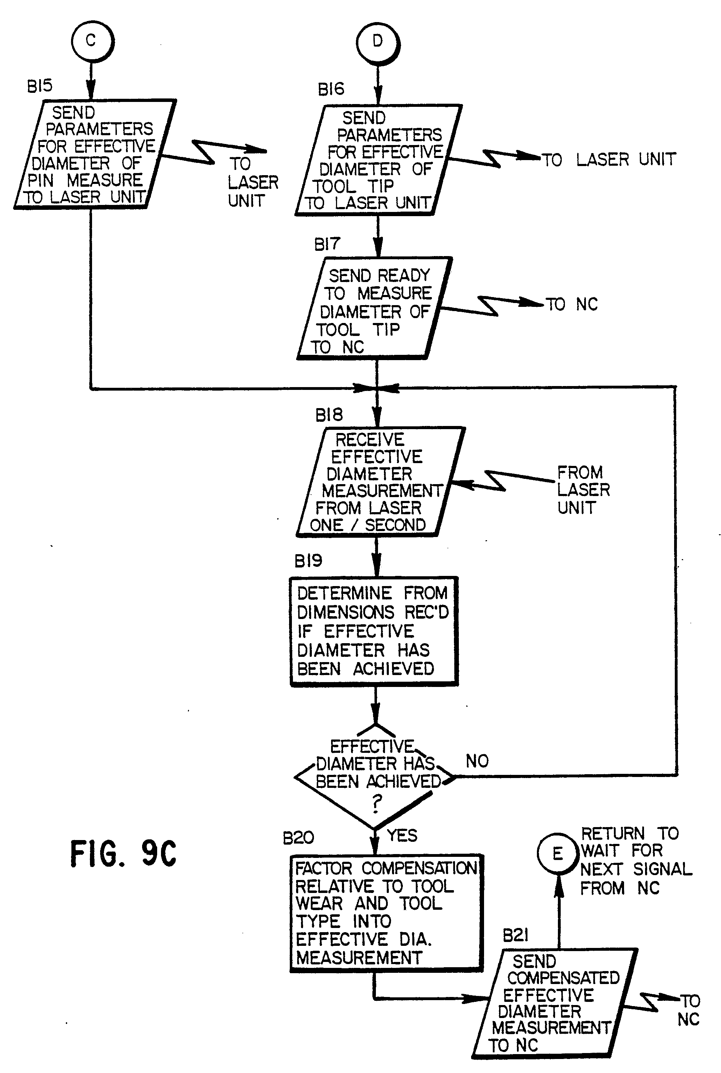

Diese Systeme werden nunmehr ausführlich erläutert. Dies einerseits anhand des in den Figuren 8A, 8B und 8C wiedergegebenen Funktions-Ablaufdiagrammes für die Programmierung des rechnergestützten numerischen Steuerungs-und Regelungssystemes (CNC-System) der Maschine, sowie andererseits anhand des in den Fig. 9A, 9B und 9C gezeigten Funktions-Ablaufdiagrammes für die Programmierung des Schnittstellen-Mikrocomputers (MIC) der Maschine.

Das in den Fig. 8A, 8B und 8C wiedergegebene Funktions-Ablaufdiagramm betrifft die Einschaltung und Verwendung des rechnergestützten numerischen Steuerungs- und Regelungssystemes (CNC-System) der Maschine.

Die folgenden Programmschritte beziehen sich dabei auf den tatsächlich am Schneidwerkzeug stattfindenden Meßvorgang. Die Programmschritte, welche sich auf Funktionen des Schnittstellen-Computers (MIC) der Maschine und auf Funktionen des Mikrocomputers oder der zentralen Datenverarbeitungseinheit (CPU) des Laserstrahl-Meßsystemes 22 beziehen, werden nachstehend ausführlich beschrieben und erläutert.

## Programmschritt A1

- Vor einer an einer Bohrung durchzuführenden, exakten zerspanenden Bearbeitung fordert das CNC-Programm ein hierfür geeignetes Bohrwerkzeug an und empfiehlt einen Werkzeugwechsel.
- Das vorher verwendete Werkzeug wird gegebenenfalls im Werkzeugmagazin abgelegt und dafür das neue Bohrwerkzeug 50 in die Maschinenspindel 16 eingespannt.

- Die Y-Achse und die Z-Achse verbleiben in der für den Werkzeugwechsel zutreffenden Position.
- Während des Werkzeug-Wechselvorgangs wird die Maschinenspindel 16 auf eine diesen Werkzeugwechsel ermöglichende Position ausgerichtet. Die Maschinenspindel 16 behält diese Position solange bei, bis mit einem Programmblock oder Programmschritt entweder ein rechtsdrehender Spindelstart oder ein linksdrehender Spindelstart befohlen wird.
- In dieser Position ist die U-Achse des Bohrwerkzeuges 18 vertikal in der Maschinenspindel 16 ausgerichtet.

## Programmschritt A2

Mit diesem Programmschritt werden definiert:
- Der Solldurchmesser (RBD) der zu bearbeitenden Bohrung.
- Die für die Bearbeitung der Bohrung erforderliche Spindeldrehzahl (SRPM) und die Spindeldrehrichtung (SDIR).
- Die Speicherung der für das verwendete Bohrwerkzeug 18 zutreffenden Nummer (BTLN).

Als Beispiel:

Es wird das Bohrwerkzeug mit der Nummer T 451 501 mit einer Arbeitsdrehzahl von 320 U/min für die Bearbeitung einer Bohrung mit einem Durchmesser von 111,125 mm (4,375″) verwendet.

## Programmschritt A3

- Die U-Achse wird innerhalb des CNC-Programmes entsprechend dem für den Bohrungs-Solldurchmesser (RBD) zutreffenden Wert zur verlangten Position hin verschoben.
- Die Y-Achse und die Z-Achse werden zu einer Position hin verschoben, in der sie sich nicht mehr im Bereich des Laserstrahl-Meßsystemes 22 befinden.

## Programmschritt A4

- Das CNC-Programm sorgt dafür, daß die Montageschiene 28 des Laserstrahl-Meßsystemes 22 aus dem Gehäuse 30 herausgefahren wird.
- Die weitere Programmverarbeitung des CNC-Programmes wird blockiert und erst dann wieder freigegeben, wenn das Laserstrahl-Meßsystem 22 an der Vorderseite des Maschinenständers 10 vollständig in seine Betriebsposition ausgefahren ist.

**Programmschritt A5**

Für das ausgewählte Werkzeug 18 werden die Werte gespeichert, welche die nominale Werkzeuglänge (NTL) und den nominalen Abstand (NTPD) zwischen Werkzeugschneidenspitze 48 und Stift oder Bolzen 52 definieren.

Beispiel:

Das Bohrwerkzeug Nr. T 451 501 hat eine nominale Länge von 216,7636 mm (8,534") sowie zwischen Werkzeugschneidenspitze 48 und Stift oder Bolzen 52 einen nominalen Abstand von 34,925 mm (1,375").

**Programmschritt A6**

- Um festzustellen, ob der Bohrungssolldurchmesser (RBD) größer als 88,9 mm (3,5") ist, kontrolliert das CNC-Programm nun den Bohrungs-Solldurchmesser (RBD).
- Falls dieser Bohrungs-Solldurchmesser (RBD) größer sein sollte, hat dies zur Folge, daß vom CNC-Programm die weiter unten angeführten Programmschritte verarbeitet werden.
- Falls dieser Bohrungs-Solldurchmesser (RBD) nicht größer als der vorgegebene Wert von 83,9 mm (3,5") ist, dann hat dies zur Folge, daß mit einem die Programmsequenz mit einem Sprungbefehl auf den Programmschritt B11 übergeht, der in Fig. 9B angegeben ist und dann seinerseits wiederum dafür sorgt, daß mit der Abstandsmessung begonnen wird, also mit dem Messen des zwischen den Stiften bzw. Bolzen 36 und 38 vorhandenen Abstandes.

**Programmschritt A7**

- Bei einem Bohrungsdurchmesser von mehr als 88,9 mm (3,5") bestimmt das CNC-Programm für die Y-Achse und für die Z-Achse die Position, in welcher für den Bohrstahl 18 der zwischen der Werkzeugschneidenspitze 48 und dem Stift bzw. Bolzen 52 gegebene Abstand gemessen werden soll und sorgt weiterhin dafür, daß Y-Achse und/oder Z-Achse in die entsprechenden Positionen verschoben werden.
Für die Berechnung dieser Positionen werden herangezogen, die konstante Position des Laserstrahl-Meßsystemes 22 sowie die gespeicherten Werte
- für den Bohrungs-Solldurchmesser (RBD)
- für die nominale Werkzeuglänge (NTL)
- und für den zwischen der Werkzeugschneidenspitze 48 und dem Stift oder Bolzen 52 gegebenen Nominalabstand (NTPD).

Beispiel:

Für den Fall, daß das Zentrum des für den Meßvorgang verwendeten Laserstrahls 1536,7 mm (60,5") über dem Werkzeugmaschinentisch liegt und vom Zentrum des Werkzeugmaschinentisches 1727,2 mm (68,0") entfernt liegt, ergibt sich für die Y-Position = 1536,7 - ((RBD-NTPD)/2); für die Z-Position = 1727,2 mm + NTL + 19,05.

**Programmschritt A8**

- Nach dem Anfahren der Positionen in der Y-Achse und der Z-Achse wird vom CNC-Programm der Mikrocomputer bzw. die zentrale Datenverarbeitungseinheit (MIC) des Laserstrahl-Meßsystemes 22 mit einem Signal gemeldet, daß das Messen des zwischen der Werkzeugschneidenspitze 48 und dem Bolzen 52 gegebenen Abstandes beginnen kann.

**Programmschritt A9**

Die weitere Verarbeitung des CNC-Programmes ist unterbrochen und wird erst dann wieder aufgenommen,
- wenn vom Mikrocomputer oder von der zentralen Datenverarbeitungseinheit (MIC) des Laserstrahl-Meßsystemes (22) aus die für das Messen des zwischen der Werkzeugschneidenspitze 48 und dem Stift oder Bolzen 52 gegebenen Abstandes zutreffenden Parameter in das Laserstrahl-Meßgerät übertragen worden sind
- und wenn mit einem Signal gemeldet worden ist, daß das Laserstrahl-Meßsystem für das Messen des zwischen der Werkzeugschneidenspitze 48 und dem Stift oder Bolzen 52 gegebenen Abstandes bereit ist.

**Programmschritt A10**

Jetzt wird der Bohrstahl 18 bzw. 50 sehr langsam durch den abtastenden Laserstrahl bewegt, damit das Laserstrahl-Meßsystem 22 für den Abstand zwischen der Werkzeugschneidenspitze 48 und dem Stift oder Bolzen 52 die größte Abmessung aufnehmen und festhalten kann.

- Das Werkzeug wird auf der Z-Achse mit einer Geschwindigkeit zwischen 1.2 und 1,3 mm/min (0,05"/min) über eine Strecke von 1,2 bis 1,3 mm (0,05") verfahren.

- Während dieses innerhalb eines Zeitraums von 1 Minute stattfindenden Bewegungsvorganges mißt das Laserstrahl-Meßsystem 22 den zwischen der Werkzeugschneidenspitze 48 und dem Stift oder Bolzen 52 gegebenen Abstand und überträgt die dabei erfaßten Meßwerte auf den Mikrocomputer oder die Zentraleinheit (MIC) des Laserstrahl-Meßsystems (22).

- Das CNC-Programm kontrolliert, ob am Ende dieses Bewegungsvorgangs ein Meßwertsignal vom Mikrocomputer bzw. von der zentralen Datenverarbeitungseinheit (MIC) empfangen und aufgenommen worden ist.

Es ist nämlich wichtig, daß der Mikrocomputer bzw. die zentrale Datenverarbeitungseinheit (MIC) des Laserstrahl-Meßsystemes 22 die Meßwerte für den Abstand zwischen der Werkzeugschneidenspitze 48 und dem Stift oder Bolzen 52 noch vor dem Abschließen dieses Bewegungsvorganges an das CNC-Programm zurückübertragen hat.

### Programmschritt A11

- Nunmehr verschiebt das CNC-Programm die Z-Achse zurück in die dem Programmschritt A7 entsprechende Position, in welcher sich die Z-Achse nicht mehr im Bereich des Laserstrahl-Meßsystemes 22 befindet.

### Programmschritt A12

- Wenn die Meßgröße für den Abstand zwischen der Werkzeugschneidenspitze 48 und dem Stift oder Bolzen 52 falsch oder überhaupt nicht aufgenommen worden ist, generiert das CNC-Programm eine Fehlermeldung und unterbricht die Verarbeitung der Programmfolge.

- Ist vom Mikrocomputer bzw. der zentralen Datenverarbeitungseinheit (MIC) des Laserstrahl-Meßsystems 22 für den zwischen der Werkzeugschneidenspitze und dem Stift oder Bolzen 52 gegebenen Abstand ein korrekter Meßwert (TBM) übernommen worden, dann hat dies zur Folge

- daß diese Meßgröße TPM im Programm gespeichert wird

- und daß die Abstandsmessung fortgesetzt wird.

Beispiel:

Es wurde ein Meßwert von 35.0266 mm (1.379") aufgenommen, der um 0,1016 mm (0,004") größer ist als der im Programmschritt A5 gespeicherte nominale Abstand (NTP) zwischen Werkzeugschneidenspitze 48 und Stift oder Bolzen 52.

### Programmschritt A13

Dieser Programmschritt wird entweder vom Programmschritt A6 oder vom Programmschritt A26 aus erreicht.

-Vom Programmschritt A6 wird er mit einem Makroprogramm-Sprungbefehl dann erreicht, wenn der Bohrungs-Solldurchmesser kleiner als 88,9 mm (3,5") ist.

- Vom Programmschritt A26 aus wird er ebenfalls mit einem Makroprogramm-Sprungbefehl dann erreicht, wenn nach einer die Toleranzabweichung des Werkzeugschneidendurechmessers korrigierenden Kompensationseinstellung der U-Achse der effektive bzw. Istdurchmesser erneut gemessen werden soll.

- Das Programm fordert sodann den Mikrocomputer bzw. die Zentraleinheit (MIC) des Laserstrahl-Meßsystemes 22 dazu auf, die für die Abstandsmesstung erforderlichen Parameter in das Laserstrahl-Meßsystem 22 zu übertragen.

### Programmschritt A14

Die Verarbeitung des CNC-Programmes ist unterbrochen und wird erst dann wieder fortgeführt, wenn die Parameter für die Meßzonen-Abstandsmessung in das Laserstrahl-Meßsystem 22 vom Mikrocomputer bzw. von der Zentraleinheit (MIC) aus in das Laserstrahl-Meßsystem 22 geladen und übertragen worden sind

- und wenn mit einem Signal angemeldet worden ist, daß der Mikrocomputer bzw. die Zentraleinheit (MIC) des Laserstrahl-Meßsystemes 22 die Abstandsmeßgrößen aufgenommen und empfangen hat.

- Diese Meßgröße wird nicht von CNC-Programm, sondern nur vom Mikrocomputer bzw. der Zentraleinheit (MIC) benötigt, und zwar nur dann, wenn der effektive bzw. Istdurchmesser geladen und übertragen wird.

## Programmschritt A15

- Jetzt und noch vor dem Starten der Abstandsmessung zwischen den Randkanten des Abtast- und/oder Meßbereichs verschiebt das CNC-Programm die Y-Achse und die X-Achse in eine Position, in welcher die Mittellinie der Werkzeugspindel 16 auf die Mitte des abtastenden Laserstrahls ausgerichtet ist.

## Programmschritt A16

- Der im Programmschritt A2 festgehaltene Wert für die Arbeitsdrehzahl der Werkzeugspindel 16 bestimmt und definiert die Werkzeugspindel-Meßdrehzahl, welche für das Messen des effektiven bzw. Istdurchmessers (GRPM) erforderlich ist.
- Die Werkzeugspindel-Meßdrehzahl (GRPM) wird als die nächste fakultative Größe von 7200, welcher dann 7 U/min zugeschlagen werden, berechnet und erreicht im Maximum 987 U/min (7200/8 + 7).
- Die Definition und Bestimmung der Werkzeugspindel-Meßdrehzahl (GRPM) ist dabei von einem Bedingungssatz des CNC-Programmes abhängig, der anschließend angeführt wird.
- Schließlich startet das Programm die Werkzeugspindel 16 zum Messen des effektiven bzw. Ist-Durchmessers mit der dafür erforderlichen Werkzeugsspindel-Meßdrehzahl (GRPM).

Die Werkzeugspindel-Meßdrehzahl (GRPM) beträgt im Beispielsfalle maximal 907 U/min, entsprechend 7200/8 + 7.

Minimal kann die Werkzeugspindel-Meßdrehzahl (GRPM) bei 107 U/min liegen, entsprechend 7200/72 + 7.

für verschiedene Werkzeugspindel-Solldrehzahlen (SRPM) haben dann die zugehörigen Werkzeugspindel-Meßdrehzahlen (GRPM) folgende Werte:
SRPM < 750 U/min,
dann GRPM = 607 U/min, entprechend 7200/12 + 7
SRPM < 525 U/min,
dann GRPM = 457 U/min, entsprechend 7200/16 + 7
SRPM < 405 U/min,
dann GRPM = 367 U/min, entsprechend 7200/20 + 7
SRPM < 330 U/min,
dann GRPM = 307 U/min, entsprechend 7200/24 + 7
SRPM < 262 U/min,
dann GRPM = 232 U/min, entsprechend 7200/32 + 7
SRPM < 187 U/min,
dann GRPM = 157 U/min, entsprechend 7200/48 + 7
SRPM < 125 U/min,
dann GRPM = 107 U/min, entsprechend 7200/72 + 7.

Bei dem im Zusammenhang mit den Programmschritt A2 angeführten Beispiel ist die Werkzeugspindel-Meßdrehzahl (GRPM) mit 307 U/min, also entsprechend 7200/24 + 7 angenommen.

## Programmschritt A17

Bei den nachfolgenden sechs Programmschritten ist die Ereignisfolge des CNC-Programmes davon abhängig,
- ob der Bohrungs-Solldurchmesser (RBD) größer oder kleiner ist als 88,9 mm (3,5"),
- ob sich die Messung des effektiven bzw. Istdurchmessers auf den Durchmesser der Werkzeugschneidenspitze 44 bzw. 48 bezieht,
- oder ob sich die Messung des effektiven bzw. Istdurchmessers auf den Durchmesser des Stiftes oder Bolzens 52 bezieht.

## Programmschritt A18

Damit die Messung des effektiven bzw. Istdurchmessers begonnen werden kann, werden die Y-Achse und die Z-Achse in die entsprechende Position verschoben. Dabei gilt
- daß bei einem Solldurchmesser von mehr als 88,9 mm (3,5") nur der Stift bzw. Bolzen in den Laserstrahl gebracht wird,
- und daß bei einem Solldurchmesser von weniger als 88,9 mm (3,5") die Werkzeugschneidenspitze gerade außerhalb des Laserstrahles positioniert wird.
Bei jeder der vorerwähnten Möglichkeiten muß
- sich die Werkzeugspindel mit der Werkzeugspindel-Meßdrehzahl (GRPM) drehen
- und mit ihrer Mittellinie auf das Zentrum des Laserstrahl-Feldes ausgerichtet sein.

## Programmschritt A19

Jetzt verlangt das Programm, daß vom Mikrocomputer bzw. von der Zentraleinheit (MIC) des Laserstrahl-Meßsystemss 22 die für die Messung des effektiven bzw. Istdurchmessers des Werkzeuges notwendigen Parameter übertragen und geladen werden, was wiederum zur Folge hat,
- daß der CNC-Steuerung mit einem MIC-Signal die Bereitschaft des Laserstrahl-Meßsystems 22 zum Messen des effektiven bzw. Istdurchmessers der Umlaufbahn der Werkzeugschneidenspitze 44 bzw. 48 gemeldet wird.

Für die Messung des Stiftes oder Bolzens 52 und für die Messung der Werkzeugschneidenspitze 44 bzw. 48 sind verschiedenartige Parameter erforderlich und mit der Übertragung von Signalen wird jeweils angezeigt, welche Parameter übertragen und geladen werden.

### Programmschritt A20

Wenn dem Mikrocomputer bzw. der Zentraleinheit (MIC) des Laserstrahl-Meßsystem 22 ein Signal aufgeschaltet ist, welches das Messen einer Werkzeugschneidenspitze mit einem Durchmesser von weniger als 88,9 mm (3,5") verlangt, und wenn nach der Aufnahme dieses Signals die dafür zutreffenden Parameter in das Laserstrahl-Meßsystem übertragen und geladen worden sind, dann wird mit einem MIC-Signal der CNC-Steuerung gemeldet, daß das Laserstrahl-Meßsystem 22 zum Messen des effektiven bzw. Istdurchmessers für die Umlaufbahn der Werkzeugschneidenspitze 44 bzw. 48 bereit ist.

Bei einem Werkzeug, dessen Durchmesser größer als 88,9 mm (3,5") ist, werden sofort nach dem Übertragen und Laden der zutreffenden Parameter die für den Stift bzw. Bolzen 52 maßgebenden Meßwerte aufgenommen.

### Programmschritt A21

Eine Werkzeugschneidenspitze mit einem Durchmesser von weniger als 88,9 mm (3,5") wird vom CNC-Programm langsam und so lange durch den Laserstrahl bewegt, bis der effektive bzw. Istdurchmesser der Umlaufbahn für die Werkzeugschneidenspitze 44 bzw. 48 erfaßt und aufgenommen worden ist.

Bei Werkzeugen mit einem Durchmesser von mehr als 88,9 mm (3,5") wird ohne Bewegung auf der Z-Achse der effektive Umlaufdurchmesser des Stiftes oder Bolzens 52 gemessen, während sich das Werkzeug selbst nicht durch den Laserstrahl bewegt.

### Programmschritt A22

Der Mikrocomputer bzw. die Zentraleinheit (MIC) des Laserstrahl-Meßsystems 22 kontrolliert und stellt fest, ob entweder für die Werkzeugschneidenspitze 44 bzw. 48 oder für den Stift bzw. Bolzen 52 der effektive bzw. Istdurchmesser erfaßt und aufgenommen worden ist. Er überträgt dann die Meßwerte in das CNC-Programm oder in die CNC-Steuerung, wobei in beiden anstehenden Fällen die Meßwerte jeweils in gleicher Weise zugeführt werden.

### Programmschritt A23

Beim Messen des effektiven Durchmessers der Umlaufbahn des Stiftes bzw. Bolzens 52 addiert oas CNC-Programm den Meßwert als Istdurchmesser (MEFD) zum doppelten Wert des mit dem Programmschritt A12 aufgenommenen Abstandes (TBM) zwischen Werkzeugschneidenspitze 44 bzw. 48 und Stift bzw. Bolzen 52.

Im anderen Falle ist der aufgenommene effektive bzw. Istdurchmesser der effektive Werkzeugdurchmesser (TEF).

- Die Rechenoperation mit dem CNC-Programm ist die folgende:

$$TEF = (2 \times TBM) + MFED \quad \text{(wenn Bohrung} > 88,9 \text{ mm (3,5"))}$$
oder
$$TEF = MEFD \quad \text{(wenn Bohrungen} < 88,9 \text{ mm (3,5")).}$$

### Programmschritt A24

Nachdem der effektive bzw. Istdurchmesser in den Mikrocomputer bzw. die Zentraleinheit (MIC) des Laserstrahl-Meßsystemes 22 übertragen worden ist, sorgt das CNC-Programm dafür, daß die Y-Achse und die Z-Achse in jeweils eine Position verschoben werden, in welcher sie sich nicht mehr im Bereich des Laserstrahl-Meßsystemes 22 befinden.

### Programmschritt A25

Nunmehr subtrahiert das CNC-Programm den mit dem Programmschritt A23 erhaltenen, effektiv gemessenen Durchmesser (MEFD) der Umlaufbahn des Stiftes bzw. Bolzens 52, von dem mit dem Programmschritt A2 definierten, gemessenen Bohrungs-Solldurchmesser (RBD) und bestimmt die Differenz aus diesen beiden Werten.

### Programmschritt A26

Anhand der mit dem Programmschritt A25 erhaltenen Differenz wird festgestellt, ob sich der gemessene effektive bzw. Istdurchmesser in dem für das Solldurchmessersystem spezifischen Toleranzbereich befindet.

Liegt die Differenz nicht in dem systemspezifischen Toleranzfeld,
- dann wird im Hinblick auf die Differenz die U-Achse mit dem Bohrstahl 18 kompensierend eingestellt
- und dann wird durch ein Zurückspringen auf den Programmschritt A13 der effektive bzw. Istdurchmesser neu gemessen.

## Programmschritt A27

Das Laserstrahl-Meßsystem 22 wird dann von der Maschine zurückgefahren. Der Einstellungsvorgang ist dann beendet, wenn nach der entsprechend dem Programmschritt A26 durchgeführten Einstellung und nach den in der folgenden Programmschleife oder den folgenden Programmschleifen vorgenommenen Einstellungen der gemessene Istdurchmesser (MEFD) der Umlaufbahn des Bolzens oder Stiftes 52 dem systemspezifischen Toleranzfeld entspricht.

## Programmschritt A28

Während die U-Achse in der für den gemessenen Durchmesser zutreffenden Position verbleibt, werden alle übrigen CNC-Achsen in die für die Bohrung erforderliche Zerspanungsposition verschoben.

Nach dem Ausbohren des Bohrungsdurchmessers können andere Bearbeitungsvorgänge durchgeführt werden, z.B. Fräsen, Bohren, Gewindeschneiden oder dergleichen.

Weil zwischen aufeinanderfolgenden Bohrvorgängen der Bohrungsdurchmesser wegen der Werkzeugabnutzung bzw. wegen der durch die U-Achse und durch den Werkzeugschlupf verursachten Ungenauigkeit der Bohrerdurchmesser nicht in der Toleranz bleibt, muß für eine neue Bohrung naturgemäß und wahrscheinlich der Meß- und Einstellvorgang jeweils neu durchgeführt werden.

Das in den Fig. 9A, 9B und 9C dargestellte Funktionsablauf-Diagramm für den Mikrocomputer bzw. die Zentraleinheit (MIC) des Laserstrahl-Meßsystems 22 wird relativ wenig aufgerufen und in Anspruch genommen.

## Programmschritt B1

Das MIC-Programm des Laserstrahl-Meßsystems 22 wird nur aufgerufen und in Anspruch genommen
- wenn mit einem vom CNC-System übertragenen Signal der Meß-und Einstellvorgang für einen Bohrstahl 18 bzw. 50 eingeleitet wird.

Ansonsten wartet das MIC-Programm darauf, daß ihm von CNC-System ein Signal aufgeschaltet bzw. zugeführt wird.

Die Reihenfolge der Meßsequenzen ist für den Mikrocomputer bzw. die Zentraleinheit (MIC) des Laserstrahl-Meßsystemes 22 irrelevant. Messungen werden nur dann vorgenommen, wenn zuvor Signale des CNC-Systemes empfangen und aufgenommen worden sind.

## Programmschritt B2

Aus dem Programmschritt A8, dem Programmschritt A13 oder dem Programmschritt A19 kann ein CNC-Signal aufgeschaltet werden und zum Messen auffordern.

Dies hat dann zur Folge,
- daß der Kanal zum Laserstrahl-Meßsytem 22 geöffnet und durchgeschaltet und dieses damit zum Absetzen und Senden irgendwelcher irrelevanter Daten aufgefordert wird,
- und die verlangte Antwort mit allen vorhandenen Fehlern vom MIC-System empfangen und aufgenommen wird.

## Programmschritt B3

Das MIC-System analysiert die vom Laserstrahl-Meßsystem 22 her aufgeschalteten, möglichen Fehler und stellt fest, ob irgendeiner dieser Fehler sich für das Betriebsverhalten des Systems als kritisch erweisen könnte.

Werden trotz Aufforderung keine Daten empfangen und aufgenommen,
- dann ist der Übertragungskanal nicht betriebsbereit und enthält einen kritischen Fehler.

## Programmschritt B4

Kritische Fehler bewirken,
- daß dann entsprechende Fehlersignale in das CNC-System übertragen und auch dem Maschinenführer angezeigt werden,
- und daß die Meßfolge angehalten und unterbrochen wird.

Diese Unterbrechung ist in der Beschreibung des CNC-Programmes nicht angegeben.

Sowohl die Verarbeitung des MIC-Programmes als auch die Verarbeitung des CNC-Programmes wird erst nach Beseitigung des Fehlers wieder aufgenommen.

**Programmschritt B5**

Wenn ein kritischer Fehler nicht festgestellt werden konnte, wird mit einer Analyse des vom CNC-System her aufgeschalteten Signales festgestellt, welches der vier Meßprogramme vom CNC-System angefordert worden ist.

Damit das angeforderte, bestimmte Meßprogramm auch durchgeführt werden kann, wird jedes Signal in entsprechender Weise und folgendermaßen verzweigend weitergeleitet:

- Zum Programmschritt B6 dann, wenn der Abstand zwischen der Werkzeugschneidenspitze 48 und dem Stift bzw. Bolzen 52 gemessen werden soll.

- Zum Programmschritt B12 dann, wenn für den Abtast-und/oder Meßbereich der Abstand zwischen den Stiften bzw. Bolzen 36 und 38 gemessen werden soll.

- Zum Programmschritt B15 dann, wenn der Istdurchmesser des beim Schneidwerkzeug verwendeten Stiftes bzw. Bolzens 52 gemessen werden soll.

- Zum Programmschritt B16 dann, wenn der Istdurchmesser der Werkzeugschneidenspitze 44 gemessen werden soll.

**Programmschritt B6**

Wenn das CNC-System das Messen zwischen der Werkzeugschneidenspitze 48 und dem Stift bzw. Bolzen 52 vorhandenen Abstandes verlangt, dann hat dies zur Folge, daß

- mit einer vom MIC-Programm übertragenen Befehlsfolge das Laserstrahl-Meßsystem 22 dazu veranlaßt wird, den Abstand zwischen der Oberkante des Stiftes bzw. Bolzens 52 und der Werkzeugschneidenspitze 48 dann zu messen, wenn das Schneidwerkzeug 18 bzw. 50 durch den Laserstrahl bewegt wird,

- bei der gerade erfolgenden Messung des zwischen der Werkzeugschneidenspitze 48 und dem Stift bzw. Bolzen 52 gegebenen Abstandes der Maximalwert aufgenommen und in das MIC-System übertragen wird.

Zu diesem Zeitpunkt, der auch durch die Programmschritte A7 und A8 beeinflußt wird, befindet sich das Schneidwerkzeug 18 bzw. 50 nicht im Laserstrahl, was wiederum zur Folge hat,

- daß vom Laserstrahl-Meßsystem 22 aus ein Fehlersignal in das MIC-System übertragen wird.

**Programmschritt B7**

Mit einem Fehlersignal kann dem MIC-System auch gemeldet werden, daß der Befehl vom Laserstrahl-Meßsystem 22 nicht richtig empfangen oder verarbeitet worden ist, was wiederum zur Folge hat, daß der Befehl vom MIC-System aus erneut in das Laserstrahl-Meßsystem 22 übertragen wird.

**Programmschritt B8**

Hat die Zentraleinheit (CPU) des Laserstrahl-Meßsystems 22 den Befehl verarbeitet und gemeldet, daß sich kein Schneidwerkzeug im Laserstrahl befindet, dann hat dies zur Folge,

- daß mit einem MIC-Signal dem CNC-Programm gemeldet wird, daß das Laserstrahl-Meßsystem 22 dazu bereit ist, den Abstand zwischen Werkzeugschneidenspitze 48 und Stift bzw. Bolzen 52 zu messen

- und daß, unter dem Einfluß der Programmschritte A9 und A10, das CNC-Programm damit beginnt, die Werkzeugschneidenspitze 48 langsam durch den Laserstrahl zu bewegen.

**Programmschritt B9**

Das Hindurchführen der Werkzeugschneidenspitze 48 durch den Laserstrahl hat zur Folge, daß der Meßwert für den zwischen der Werkzeugschneidenspitze 48 und dem Stift bzw. Bolzen 52 gegebenen Abstand und die akkumulierte Maximalabmessung jede Sekunde gemeldet wird.

**Programmschritt B10**

Das MIC-Programm stellt fest, wann die Werkzeugschneidenspitze 48 durch den Laserstrahl geführt worden ist und überwacht dazu über einen bestimmten Zeitraum die Meßwerte für den Abstand zwischen der Werkzeugschneidenspitze 48 und dem Stift oder Bolzen 52 sowie die Maximalabmessung.

Die empfangenen und aufgenommenen Meßwerte zeigen die Werkzeuggeometrie.

Aus den Meßwerten kann die Meßgröße für den Abstand zwischen Werkzeugschneidenspitze 48 und Stift bzw. Bolzen abgeleitet werden.

**Programmschritt B11**

Wenn mit Programmschritt B10 der Abstand zwischen Werkzeugschneidenspitze 48 und Stift oder Bolzen 52 gemessen und bestimmt worden ist, wird die beim Durchgang der Werkzeugschneidenspitze 48 aufgenommene Maximalabmessung in das CNC-Programm übertragen und damit signalisiert, daß das Messen des zwischen der Werkzeugschneidenspitze 48 und dem Stift oder Bolzen 52 gegebenen Abstandes abgeschlossen ist, wie das aus dem Programmschritt A10 hervorgeht.

Das MIC-Programm wird mit einem Verzweigungssprung zum Programmschritt B1 zurückgeführt und erwartet dann das nächste CNC-Signal, welches
- normalerweise das Abstandsmeßprogramm für die Abtast-und/oder Meßzone ist.

## Programmschritt B12

Das vom CNC-System zum Messen des Abstandes der Abtast-und/oder Meßzone aufgeforderte MIC-System antwortet damit, daß von ihm eine für das Messen des Abstandes der Abtast-und/oder Meßzone zutreffende Befehlsfolge in das Laserstrahl-Meßsystem 22 übertragen wird.

In der Zwischenzeit hat das CNC-System das Schneidwerkzeug 18 bzw. 50 aus dem Bereich des Laserstrahls herausgefahren und damit die Voraussetzung dafür geschaffen, daß der Meßvorgang unbehindert durchgeführt werden kann.

## Programmschritt B13

Die Meßgröße für die Abtast- und/oder Meßzone des Laserstrahls wird vom Laserstrahl-Meßsystem 22 übernommen und es wird kontrolliert,
- ob sie im Toleranzbereioch liegt und damit richtig ist
- oder ob Fehler darin enthalten sind, die auf mögliche Ursachen hin analysiert werden.

Wenn die übernommene Meßgröße falsch ist oder Fehler aufweist, dann hat dies zur Folge,
- daß das Programm mit einer Sprungverzweigung zum Programmschritt B4 zurückgeführt wird
- und daß der Meßvorgang angehalten und unterbrochen wird.

## Programmschritt B14

Wenn die Meßgröße für die Abtast- und/oder Meßzone des Laserstrahls richtig und in Ordnung ist,
- dann wird dies dem CNC-System mit einem Signal des MIC-Programmes gemeldet
- und in der Verarbeitung des CNC-Programmes fortgefahren, wie das der Programmschritt A14 angibt.

Die Abstandsmeßgröße wird zur weiteren Verwendung im MIC-System gespeichert. Sie wird in das CNC-Programm nicht übertragen und von diesem auch nicht angefordert.

Nunmehr geht das MIC-Programm mit einer Sprungverzweigung auf den Programmschritt B1 zurück und wartet auf das nächste Meßsignal des CNC-Systemes, wobei dieses Signal
- normalerweise eines der beiden Meßprogramme zum Messen des effektiven bzw. Istdurchmessers ist.

## Programmschritt B15

Wenn das MIC-System vom CNC-System zum Messen des Istdurchmessers der Umlaufbahn des Stiftes bzw. Bolzens 52 aufgefordert wird, dann antwortet es damit, daß es für diese Meßfolge eine Befehlsfolge in das Laserstrahl-Meßsystem 22 überträgt. In dieser Befehlsfolge ist enthalten:
- die zuvor im Zusammenhang mit den Programmschritten B13 und B14 aufgenommene und gespeicherte Meßgröße für den Abstand der Abtast-und/oder Meßzone des Laserstrahls.

In diesem Zusammenhang ist zu beachten,
- daß sich nach dem Programmschritt A18 und nach dem Programmschritt A19 der zum Schneidwerkzeug 18 bzw. 50 gehörende Stift bzw. Bolzen 52 bereits im Laserstrahl befindet
- und daß dieser Stift bzw. Bolzen 52 mit der richtigen Spindeldrehzahl rotiert.

Jetzt springt das MIC-Programm zwecks Durchführung einer der für den effektiven bzw. Istdurchmesser zutreffenden Meßfolge auf den Programmschritt B18.

## Programmschritt B16

Wird das MIC-System vom CNC-System zum Messen des Istdurchmessers der Werkzeugschneidenspitze 48 aufgefordert, dann antwortet es damit, daß es die für diesen Meßvorgang zutreffende Befehlsfolge in das Laserstrahl-Meßsystem 22 überträgt. In dieser Befehlsfolge sind enthalten:
- die zuvor im Zusammenhang mit den Programmschritten B13 und B14 aufgenommene und gespeicherte Abstandsgröße für die Abtast- und/oder Meßzone
- und andere Parameter, die das Messen einer rotierenden Werkzeugschneidenspitze ermöglichen, welche sich aus dem Laserstrahl herausbewegen kann oder während ihrer Drehbewegung keine ganz klar ausgestaltete Kante hat.

In diesem Zusammenhang ist zu beachten,
- daß sich das Schneidwerkzeug außerhalb des Laserstrahlbereichs befindet
- und daß das CNC-Programm auf ein Weiterführungssignal wartet, wie das in den Programmschritten A18 und A20 angegeben ist.

**Programmschritt B17**

Wenn die Befehlsfolge in das Laserstrahl-Meßsystem 22 übertragen worden ist, wird dem CNC-System mit einem MIC-Signal gemeldet,
- daß das Laserstrahl-Meßsystem 22 zum Messen des Istdurchmessers der Werkzeugschneidenspitzen 48 bereit ist
- und daß das CNC-Programm weitergeführt werden kann und dann die Werkzeugschneidenspitze 48 so durch den Laserstrahl führt, wie dies auch bei der die Werkzeugschneidenspitze 48 und den Stift bzw. Bolzen 52 benutzenden Meßverfahren der Fall ist und im Programmschritt A21 angegeben wird.

**Programmschritt B18**

Wird jeweils einer der beiden Istdurchmesser gemessen, dann wird vom Laserstrahl-Meßsystem 22 aus der effektive bzw. Istdurchmesser der rotierenden Werkzeugschneidenspitze 48 oder der effektive bzw. Istdurchmesser der Umlaufbahn des rotierenden Stiftes bzw. Testbolzens 52 jede Sekunde in das MIC-System übertragen.

Die vom Laserstrahl-Meßsystem 22 aufgenommenen Meßwerten werden bei jeder Abtastung mit dem Laserstrahl als maximaler Werkzeugdurchgang durch den Laserstrahl berechnet. Dabei wird
- die maximale Abmessung für die Laserstrahlmessung so lange festgehalten, bis der effektive bzw. Istdurchmesser erfaßt oder bis das Laserstrahl-Meßsystem 22 abgeschaltet wird.

Mit den im Programmschritt A16 beschriebenen Parametern wird anhand der gespeicherten Messung der effektive bzw. Istdurchmesser nach 15 bis 20 Sekunden aufgenommen und erfaßt.

Während der vom Laserstrahl-Meßsystem 22 durchgeführten Messungen wird der Istwert - auch schon während der ersten 15 Sekunden - jede Sekunde in das MIC-System übertragen.

**Programmschritt B19**

Wenn der effektive bzw. Istdurchmesser der Umlaufbahn des Stiftes bzw. Testbolzens 52 gemessen und dabei aufgenommen wird, wird das Laserstrahl-Meßsystem 22 für eine erneute Messung dieses Istdurchmessers zurückgeschaltet.

Wenn der Istdurchmesser der Werkzeugschneidenspitze 48 gemessen wird, wird das Laserstrahl-Meßsystem 22 synchron zu dem sich durch den Laserstrahl bewegenden Werkzeug zurückgeschaltet.

In beiden Fällen wird dreimal zurückgeschaltet und erneut gemessen, wobei dann für den endgültigen Istdurchmesser der Mittelwert gebildet wird.

**Programmschritt B20**

Nunmehr werden vom MIC-Programm aus einer Datei die Faktoren abgefragt, die bei konstanter Position der U-Achse zu Abweichungen zwischen dem gemessenen Bohrungsdurchmesser und dem tatsächlich gegebenen Bohrungsdurchmesser führen können, bspw. solche Faktoren, wie die Werkzeugdurchbiegung, die aufgrund des bis dahin vorliegenden Werkzeugeinsatzes gegebene Abnutzung des Schneidwerkzeuges, die spezifische Geometrie des Schneidwerkzeuges und dergleichen mehr.

Diese Faktoren werden zudem mit Programmschritt B19 erhaltenen endgültigen Istdurchmesser entweder addiert oder aber von diesem subtrahiert.

**Programmschritt B21**

Die mit den im Programmschritt B20 beschriebenen Faktoren kompensierend korrigierte Meßgröße für den endgültigen Istdurchmesser wird in das CNC-Programm übertragen, um festzustellen, ob eine korrigierende Einstellung der U-Achse notwendig ist.

Sodann geht das MIC-Programm mit einer Sprungverzweigung auf den Programmschritt B1 zurück und wartet auf das Starten eines neuen Meßprogrammes.

Aus den vorstehenden Erläuterungen ergibt sich, daß bei automatisierten Bearbeitungsvorgängen die genaue Abmessung von Bohrungen davon abhängig ist
- daß das Werkzeug bei Schnittgeschwindigkeit oder nahezu mit Schnittgeschwindigkeit gemessen wird
- und daß es zu einem effektiven Vermessen des rotierenden Schneidwerkzeuges mit einem optischen Laserstrahl-Meßsystem 22 wiederum erforderlich ist, das Schneidwerkzeug mit einer Meßdrehzahl anzutreiben, die zur Abtastfrequenz der verwendeten Laserstrahl-Sendeeinheit 24 asynchron ist.

## Ansprüche

1. Verfahren zum automatischen Messen des von einem auf ein Werkstück einwirkenden Schneidwerkzeug während eines Zerspanungsvorgangs erzielten Arbeitsergebnisses, insbesondere zur Betimmung des exakten Radialabstandes und/oder der exakten Axialposition der Schnittbahn eines rotierenden Schneidwerkzeuges relativ zum Werkstück, **dadurch gekennzeichnet,**

daß das mit einer der Arbeits- bzw. Solldrehzahl (SRPM) angenäherten Meßdrehzahl (GRPM) angetriebene Schneidwerkzeug (18 bzw. 50) in den Abtast- und/oder Meßbereich eines Laserstrahles gebracht wird,

daß der Laserstrahl rechtwinklig zu sich selbst in eine Abtast- und/oder Meßebene (40) mit einer Geschwindigkeit bewegt sowie mit einer Abtastfrequenz betrieben wird, die zur Werkzeug-Meßdrehzahl (GRPM) ein Verhältnis hat, das einer asynchronen numerischen Mischgröße entspricht,

und daß dabei durch die bei der Laserstrahl-Abtastung aufeinanderfolgenden Abtastvorgänge der Abstand zwischen der Randkante des Abtast- und/oder Meßbereichs und der ihr nächstgelegenen Schneidwerkzeugspitze (44 bzw. 48) als eine Meßgröße bestimmt wird.

2. Verfahren nach Anspruch 1 zum Messen des Durchmessers der Schnittbahn eines einen die Abmessungen der Abtastzone unterschreitenden Schnittkreisdurchmesser aufweisenden Schneidwerkzeuges,
**dadurch gekennzeichnet,**

daß die Abtast- und/oder Meßebene (40) des Laserstrahls am größten Schnittkreisdurchmesser des Schneidwerkzeuges (18 bzw. 50) rechtwinklig zur Achse der Werkzeugspindel (16) ausgerichtet wird, und daß dabei der Abstand zwischen der Randkante (36 bzw. 38) des Abtast- und/oder Meßbereichs und dem Schnittkreisdurchmesser des Schneidwerkzeuges (50) durch die kürzeste gemessene Laufzeit des Laserstrahles bestimmt wird.

3. Verfahren nach Anspruch 2 zum Messen der Schnittbahn eines die Abmessungen der Abtastzone unterschreitenden Schnittkreisdurchmesser aufweisenden Bohrwerkzeuges,
**dadurch gekennzeichnet,**

daß der Laserstrahl auf den Umlaufkreis der Schneidspitze (48) der Schneidkörper ausgerichtet wird.

4. Verfahren nach Anspruch 1 zum Messen eines die Abmessungen der Abtastzone überschreitenden Schnittkreisdurchmessers der Schneidspitze von mit radial verstellbaren Schneidkörpern besetzten Bohrwerkzeugen,
**dadurch gekennzeichnet,**

daß das freie Ende des Bohrwerkzeuges (50) mit einem Stift oder Bolzen (52) versehen wird,

daß dieser Stift oder Bolzen (52) parallel aber exzentrisch zur Werkzeugspindelachse vorstehend angeordnet sowie auf die Schneidspitze (48) des Schneidkörpers ausgerichtet wird,

daß danach der radiale Abstand (1/2RBD) zwischen dem Stift oder Bolzen (52) und der Schneidspitze (48) des Schneidkörpers als Meßgröße für den Schnittkreisdurchmesser (NTPD) bestimmt wird,

daß dann das Bohrwerkzeug (50) lediglich mit dem Stift oder Bolzen (52) in die Abtastzone und/oder Meßebene (40) gestellt sowie darin dessen Umlaufdurchmesser durch die Laserstrahlabtastung gemessen wird,

und daß dabei schließlich aus dem Umlaufdurchmesser des Stiftes oder Bolzens (52) und dessen Radialabstand (1/2RBD) von der Schneidspitze (48) des Schneidkörpers der effektive Schnittkreisdurchmesser des Bohrwerkzeuges (50) im Summen bildende Addition ermittelt wird.

5. Verfahren nach Anspruch 4,
**dadurch gekennzeichnet,**

daß zur radialen Abstandsmessung zwischen der Schneidspitze (48) des Schneidkörpers und dem Stift oder Bolzen (52) beide Teile (48 und 52) in die Abtastzone und Meßebene (40) des Laserstrahles gebracht werden,

daß dabei die Schneidspitze (48) des Schneidkörpers in den Bereich des Totpunktzentrums gestellt wird,

und daß dann die Werkzeugspindel (16) während aufeinanderfolgender Meßvorgänge langsam und oszillierend über einen begrenzten Bogen auf beiden Seiten des Totpunktzentrums bewegt sowie dabei die maximale Laufzeit für den zwischen der Werkzeugschneidenspitze (48) und dem Stift bzw. Bolzen (52) erfolgenden Durchgang des Laserstrahles als eine Meßgröße für den Abstand zwischen Werkzeugschneidenspitze (48) und Stift bzw. Bolzen gemessen wird.

6. Meßsystem (22) für die Zusammenarbeitet mit in Maschinenspindeln (16) eingespannten rotierend angetriebenen Schneidwerkzeugen (18 bzw. 50) zur Durchführung des Verfahrens nach einem der Ansprüche 1 bis 5,
**gekennzeichnet durch**

- eine Laserstrahl-Sendeeinheit (24), deren Laserstrahl mit vorgegebener Geschwindigkeit und einer einem im wesentlichen zusammengesetzten Vielfachen der Werkzeugdrehzahl entsprechenden Abtastfrequenz quer zu sich selbst längs einer Abtast- und/oder Meßebene (40) durch eine Abtastzone bewegbar ist;

- eine lichtempfindliche Laserstrahl-Empfangseinheit (26), mit der das Auftreffen des bewegbaren Laserstrahles erfaßbar und aufnehmbar ist;

- eine Ausrichtvorrichtung (28) zur gegenseitigen Zuordnung von Laserstrahl-Sendeeinheit (24) und Laser-Empfangseinheit (26) an einander gegenüberliegenden Seiten der Achse der Werkzeugspindel (16), mit deren Hilfe die Abtast- und/oder Meßebene (40) innerhalb der Abtastzone durch das Schneidwerkzeug (18 bzw. 50) abschattend unterbrechbar ist;

- und eine Meßvorrichtung, mit der die kürzeste Laufzeit des Laserstrahls von der Laserstrahl-Sendeeinheit (24) zur Laserstrahl-Empfangseinheit (26) beim Abtasten des Abtastzonenrandes (36, 38) und der diesem nächstgelegenen Schneidwerkzeugspitze (44 bzw. 48) erfaßbar sowie als Abstand zwischen dem Abtastzonenrand (36, 38) und der betreffenden Schneidenwerkzeugspitze (44 bzw. 48) meßbar ist.

7. Meßsystem nach Anspruch 6,
**dadurch gekennzeichnet,**
daß für das Messen eines die Abmessungen der Abtastzone unterschreitenden Schnittkreisdurchmessers (NTPD) des Werkzeuges (18)
- die Abtast- und/oder Meßebene (40) rechtwinklig zur Achse der Werkzeugspindel (16) ausgerichtet ist und beim größten Schnittkreisdurchmesser mit der Drehebene des Werkzeuges (18) zusammenfällt, und daß dabei
- die zwischen dem Abtasten des jeweiligen Abtastzonenrandes (36, 38) und dem Auftreffen auf die nächstgelegene Schneidwerkzeugspitze (48) verstreichende Laufzeit des Laserstrahls als maximaler Schnittkreisdurchmesser (NTPD) meßbar ist.

8. Meßsystem nach Anspruch 7,
**dadurch gekennzeichnet,**
daß für das Messen des Umlaufdurchmessers der Schneidwerkzeugspitze (48) der maximale Schnittkreisdurchmesser den Drehebenen-Durchmesser der Schneidwerkzeugspitze (48) bildet.

9. Meßsystem nach Anspruch 6,
**dadurch gekennzeichnet,**
daß für das Messen eines die Abmessung der Abtastzone überschreitenden Schnittkreisdurchmessers des Werkzeuges (18)
- das freie Ende des Werkzeuges (18) einen parallel zur Achse der Werkzeugspindel (16) vorstehenden Stift oder Bolzen (52) trägt, der mit seiner Längsachse zur Achse der Werkzeugspindel (16) exentrisch angeordnet und auf die Schneidwerkzeugspitze (48) ausgerichtet sowie in die Abtastzone und/oder Meßebene (40) stellbar ist,
- und dabei dieser Stift oder Bolzen (52) einen vorgegebenen Radialabstand (RBD) zu der Schneidwerkzeugspitze (48) aufweist, durch den die Meßgröße für den Schnittkreisdurchmesser (NTPD) bestimmt ist.

10. Meßsystem nach Anspruch 7,
**gekennzeichnet durch**
zwei im Abstand zueinander angeordnete Begrenzungselemente (36 und 38) für den Abtastzonenrand, mittels denen der Strahlengang des Laserstrahls zur Laserstrahl-Empfangseinheit (26) hin abschattbar und unterbrechbar ist.

11. Meßsystem nach Anspruch 6,
**dadurch gekennzeichnet,**
daß bei parallel zur Achse der Werkzeugspindel (16) ausgerichteter Abtast- und/oder Meßebene (40) die Axialposition der Schneidwerkzeugspitze (48) mit vom Abtastzonenrand zu einer Schneidwerkzeugspitze (48) geführter Laserstrahl-Abtastung meßbar ist.

12. Meßsystem nach Anspruch 6,
**dadurch gekennzeichnet,**
daß die Laserstrahl-Sendeeinheit (24) und die Laserstrahl-Empfangseinheit (26) drehbar (42) oder schwenkbar (41) angeordnet sowie wahlweise rechtwinklig oder parallel zur Achse der Werkzeugspindel (16) ausrichtbar sind.

13. Meßsystem nach Anspruch 6,
**dadurch gekennzeichnet,**
daß die Werkzeugdrehzahl zur Abtastfrequenz des Laserstrahls in ein Verhältnis setzbar ist, das einer asynchronen numerischen Mischgröße entspricht, die z.B. bei max. $(7200/8 + 7)$ und bei min. $(7200/72 + 7)$ liegt, also max. 1:7,9382579 und min. 1:67,289719 ausmacht.

14. Meßsystem nach einem der Ansprüche 6 bis 13,
**dadurch gekennzeichnet,**
daß das Verhältnis zwischen der Solldrehzahl (SRPM) für die Werkzeugspindel (16) und der Meßdrehzahl (GRPM) hierfür in einem Bereich liegt, der etwa von 1:0,8 bis 1:0,93 reicht, wobei die maximale Solldrehzahl (SRPM) unter 750 U/min und die minimale Solldrehzahl (SRPM) unter 125 U/min liegt, während hierbei die maximale Meßdrehzahl (GRPM) 607 U/min und die minimale Meßdrehzahl (GRPM) bei 107 U/min liegt und jeweils einer fakultativen Größe einer Abtastfrequenz des Laserstrahls mit 7200 Abtastvorgängen/min entspricht, wobei der der fakultativen Größe entsprechenden Drehzahl eine niedrige Drehzahl von bspw. 7 U/min hinzugefügt ist.

# FIG. 1

FIG. 2

FIG. 3

FIG. 4

LASER SCAN
DIRECTION

REFERENCE

BORE
DIAMETER

REFERENCE

TRANSMITTER

RECEIVER

**FIG. 5**

**FIG. 6**

LASER SCAN DIRECTION

TRANSMITTER

RECEIVER

**FIG. 7**

LASER SCAN DIRECTION

TRANSMITTER

RECEIVER

# FIG. 8A

START

A1
TOOL CHANGE
PLACING
BORING BAR IN
SPINDLE
INDEX

A3
A4
MOVE Y-AXIS
AND Z-AXIS
CLEAR
_____
EXTEND
LASER UNIT

RETURN
POINT IF
MEASUREMENT
IS OUT OF
TOLERANCE

C

A6
IS
REQUIRED
DIAMETER
GREATER THAN
3.5" ?    NO

YES

A7
POSITION
Y-AXIS AND
Z-AXIS TO
MEASURE
TIP TO PIN

A8
SIGNAL MIC
TO MEASURE
TIP TO PIN    →TO MIC

A9
SIGNAL
FROM MIC
_____
TIP TO PIN
MEASUREMENT
READY    →TO MIC

A10
MOVE TOOL
TIP SLOWLY
THROUGH
LASER
BEAM

RECEIVE
TIP TO PIN
MEASUREMENT
FROM MIC    ← FROM MIC

A11
MOVE
Z-AXIS
CLEAR OF
LASER BEAM

A12
IS
RECEIVED
MEASUREMENT
IN TOLERANCE
?    NO →  DISPLAY
ERROR
IN
MEASURE

YES

STOP

A13
SIGNAL MIC
TO MEASURE
GAP
DIMENSION    → TO MIC

A14
SIGNAL FROM
MIC
_____
GAP
DIMENSION
MEASURED    ← FROM MIC

A15
POSITION
Y-AXIS AND
Z-AXIS FOR
E DIAMETER
MEASURE

A    CONTINUED  ON FIG. 8B

FIG. 8B

A ) CONTINUED FROM 8A

A16

START SPINDLE AT FACTORIAL OF 1800 RAM PLUS 7 RPM

A17

IS REQUIRED DIAMETER GREATER THAN 3.5"?

NO

YES

A18

MOVE Z-AXIS JUST SHORT OF LASER BEAM

A18

MOVE Z-AXIS TO PLACE ROTATING PIN IN LASER BEAM

A19

SIGNAL MIC TO MEASURE EFFECTIVE DIAMETER OF TOOL TIP

TO MIC

A19

SIGNAL TO MIC TO MEASURE EFFECTIVE DIAMETER OF GAUGE PIN

TO MIC

A20

SIGNAL FROM MIC
READY FOR DIAMETER MEASURE OF TOOL TIP

FROM MIC

A22

RECEIVE EFFECTIVE DIAMETER OF GAUGE PIN FROM MIC

FROM MIC

A21

MOVE TOOL TIP SLOWLY THROUGH LASER BEAM

A23

MEASURED DIAMETER IS EFFECTIVE DIA. OF GAUGE PIN PLUS 2 TIMES TIP TO PIN MEASUREMENT

A22

RECEIVE MEASURED DIAMETER OF TOOL FROM MIC

FROM MIC

B ) CONTINUED ON FIG. 8C

EP 0 305 955 A2

# FIG. 8C

B CONTINUED FROM FIG. 8B

A24

MOVE Y-AXIS AND Z-AXIS CLEAR OF LASER UNIT

A25

CALCULATE DIFFERENCE BETWEEN THE REQUIRED DIAMETER AND MEASURED DIAMETER

A26

IS DIFFERENCE WITHIN TOLERANCE ?

NO

YES

A27

RETRACT LASER UNIT FROM MACHINE

ADJUST U-AXIS BY DIFFERENCE OF MEASURED DIAMETER

END OF MEASURING

A28

CUT BORE CONTINUE MACHINING OPERATIONS

END

RETURN TO REMEASURE GAP AND EFFECTIVE DIAMETER

C

FIG. 9A

MEASURE TIP TO PIN

## FIG. 9B

A

B6
SEND PARAMETERS TO MEASURE TIP TO PIN TO LASER UNIT → TO LASER UNIT

RECEIVE ERRORS FROM LASER UNIT ← FROM LASER UNIT

B7
TIP TO PIN PARAMETERS RECEIVED OK AT LASER? — NO

YES

B8
SEND TIP TO PIN MEASUREMENT READY SIGNAL TO NC → TO NC

B9
RECEIVE TIP TO PIN DIMENSIONS FROM LASER UNIT ONE/SECOND ← FROM LASER UNIT

B10
DETERMINE FROM DIMENSIONS REC'D FROM LASER IF TOOL TIP HAS PASSED THROUGH LASER BEAM

HAS TOOL TIP PASSED THRU BEAM? — NO

YES

B11
SEND TIP TO PIN MEASUREMENT TO NC → TO NC

E
RETURN TO WAIT FOR NEXT SIGNAL FROM NC

B MEASURE GAP

B12
SEND PARAMETERS TO MEASURE GAP DIMENSION TO LASER UNIT → TO LASER UNIT

B13
RECEIVE ERRORS & GAP DIMENSION FROM LASER UNIT ← FROM LASER UNIT

GAP DIMENSION RECEIVED FROM LASER UNIT? — NO → F ERROR IN READ FROM LASER UNIT

YES

B14
SEND GAP DIMENSION MEASURED SIGNAL TO NC → TO NC

E
RETURN TO WAIT FOR NEXT SIGNAL FROM NC

## FIG. 9C

**C**

**BI5** — SEND PARAMETERS FOR EFFECTIVE DIAMETER OF PIN MEASURE TO LASER UNIT → TO LASER UNIT

**D**

**BI6** — SEND PARAMETERS FOR EFFECTIVE DIAMETER OF TOOL TIP TO LASER UNIT → TO LASER UNIT

**BI7** — SEND READY TO MEASURE DIAMETER OF TOOL TIP TO NC → TO NC

**BI8** — RECEIVE EFFECTIVE DIAMETER MEASUREMENT FROM LASER ONE / SECOND → FROM LASER UNIT

**BI9** — DETERMINE FROM DIMENSIONS REC'D IF EFFECTIVE DIAMETER HAS BEEN ACHIEVED

EFFECTIVE DIAMETER HAS BEEN ACHIEVED ? — NO

YES

**B20** — FACTOR COMPENSATION RELATIVE TO TOOL WEAR AND TOOL TYPE INTO EFFECTIVE DIA. MEASUREMENT

**B21** — SEND COMPENSATED EFFECTIVE DIAMETER MEASUREMENT TO NC → TO NC

**E** — RETURN TO WAIT FOR NEXT SIGNAL FROM NC